# EUROPEAN PATENT SPECIFICATION

(11) **EP 0 352 189 B1**
(45) Date of publication and mention of the grant of the patent: **28.09.1994**
(21) Application number: 89402056.9
(22) Date of filing: 19.07.1989
(51) Int. Cl.: H02K 41/03, H02K 37/12, B25J 9/12

(54) **Strong magnetic thrust force type actuator**
Betätiger der Bauart mit starker magnetischer Schubkraft
Actionneur du type à forte poussée magnétique

(30) Priority: 20.07.1988 JP 180497/88; 08.11.1988 JP 282021/88; 08.11.1988 JP 282022/88; 14.11.1988 JP 287033/88
(43) Date of publication of application: 24.01.1990
(73) Proprietor: Shinko Electric Co. Ltd., Chuo-ku Tokyo 103 (JP)
(72) Inventor: Nakagawa, Hiroshi c/o Shinko Electric Co., Ltd., Ise-shi Mie-ken (JP); Maeda, Minoru c/o Shinko Electric Co., Ltd., Ise-shi Mie-ken (JP)
(74) Representative: Dubois-Chabert, Guy

(56) References cited:
- EP-A- 0 143 029
- WO-A-88/06375
- FR-A- 2 606 951
- FR-E- 94 950
- US-A- 4 563 602
- PATENT ABSTRACTS OF JAPAN vol. 5, no. 51 (E-51)(723) 10 April 1981, & JP-A-56 3570 (YOKOGAWA DENKI)

## Description

### BACKGROUND OF THE INVENTION

### Field of the invention

The present invention relates to a strong magnetic thrust force type actuator producing a relatively large magnetic thrust for use in an industrial robot, or the like.

### Prior Art

Conventional linear pulse motors comprise a primary member and secondary member. Generally the primary member is an electrically supplied member, in other words, an electromagnetically exciting member. Accordingly, the primary member travels along the secondary member in the linear to and fro direction when a pulse current is supplied to the primary member. In this case, the primary member is movable, while the secondary member is stationary, but either the primary or secondary member can be movable.

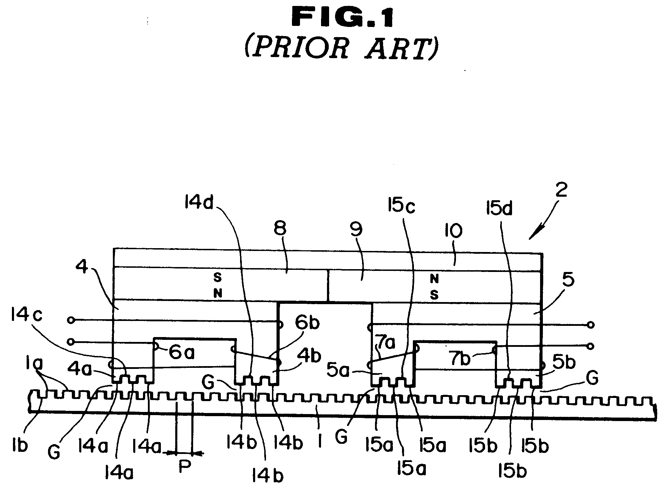

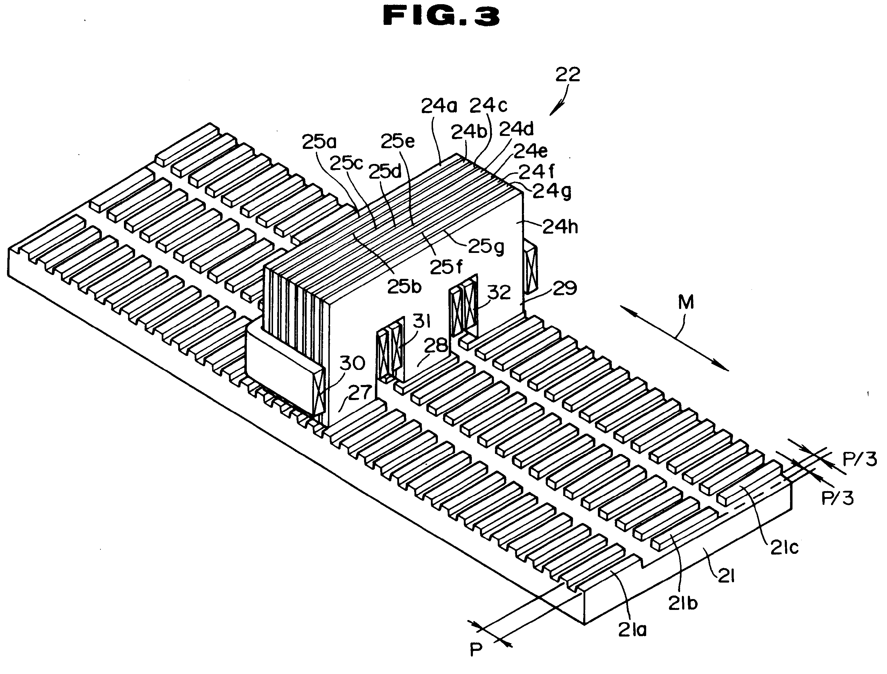

Fig. 1 shows an conventional linear pulse motor. Numeral 1 designates a secondary member which is an elongate magnetic material plate, the upper side of which forms rectangular teeth 1a and grooves 1b along the longitudinal direction at an equal pitch. Above the teeth 1a and grooves 1b, primary member 2 is positioned at a predetermined space therebetween. This primary member 2 is movably supported by a supporting member as a roller, wheel, or the like. Primary member 2 comprises core 4 for the A-phase and core 5 for the B-phase, both having magnetic poles 4a and 4b for core 4, and magnetic poles 5a and 5b for core 5; coils 6a and 6b wound around magnetic poles 4a and 4b, respectively; coils 7a and 7b wound around magnetic poles 5a and 5b, respectively; permanent magnets 8 and 9 disposed on cores 4 and 5, in which the N-pole of permanent magnet 8 faces the upper surface of core 4, while the S-pole of permanent magnet 9 faces the upper surface of core 5, respectively; cover plate 10, formed by a magnetic material, covers permanent magnets 8 and 9. The lower side of magnetic pole 4a has pole teeth 14a and grooves 14c, each of which is formed at an equal pitch. The lower side of magnetic poles 4b, 5a, and 5b has the similar pole teeth 14b, 15a, and 15b, then grooves 14d, 15c, and 15d, respectively.

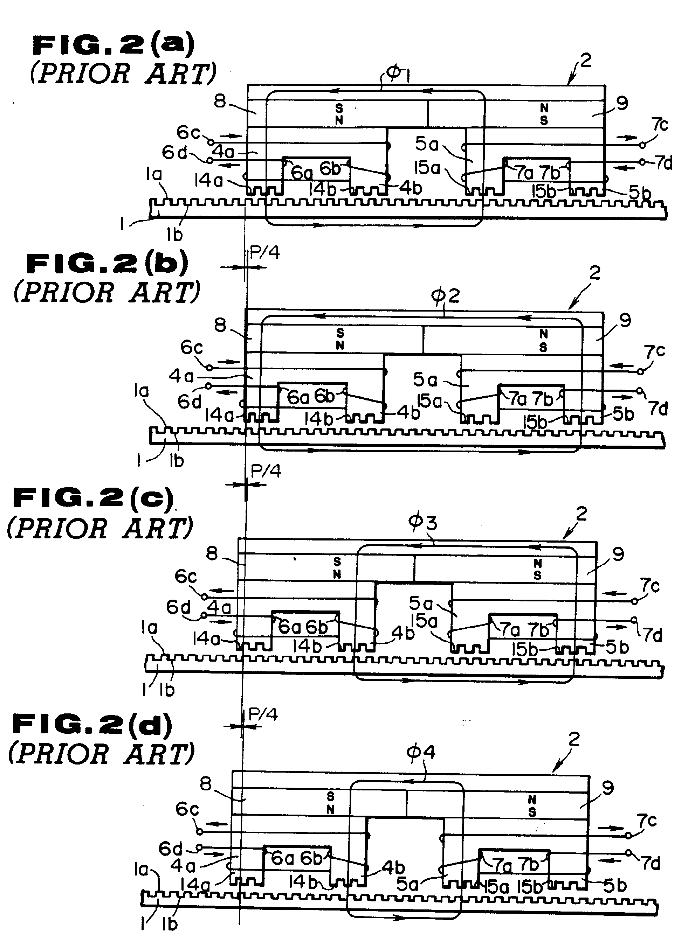

Assuming that the equal pitch of rectangular teeth 1a indicates the distance of P, each of the pole teeth 14b, 15a, and 15b is shifted by the distance of P/4 with respect to rectangular teeth 1a as shown in Fig. 2, and the lower surface of these are positioned at the distance of G from the upper surface of teeth 1a.

Accordingly, in turn, supplying the pulse current to coils 6a, 6b, 7a, and 7b generates a magnetic flux respectively. These magnetic flux and magnetic flux from permanent magnets 8 and 9, in turn, act on respective magnetic poles 4a, 4b, 5a, and 5b, allowing primary member 2 to travel along secondary member 1 in the longitudinal direction.

Next, in Fig. 2, primary member 2 traveling along secondary member 1 is described based on the 2-phase exciting system when supplying a pulse current to coils 6a and 6b in one group, and coils 7a and 7b in the other group. This pulse current energizes magnetic poles 4a, 4b, 5a, and 5b.

In Fig. 2(a), by supplying the pulse current from terminal 6c to terminal 6d for coils 6a and 6b as shown by the arrow, and also, supplying this pulse current from terminal 7d to terminal 7c for coils 7a and 7b as shown by the arrow direction, the magnetic flux generated from coil 6a is added to the magnetic flux generated from permanent magnet 8 at magnetic pole 4a for the A-phase, and each of these magnetic flux at magnetic pole 4b for the A-phase is counteracted each other. On the other hand, the magnetic flux generated from coil 7a is added to the magnetic flux generated from permanent magnet 9 at magnetic pole 5a for the B-phase, and each of these magnetic flux at magnetic pole 5b for the B-phase is counteracted each other. Magnetic flux φ₁ is thus generated in the arrow direction as shown in Fig. 2(a). As a result, the magnetic field acts on pole teeth 14a and 15a facing rectangular teeth 1a to produce a magnetic thrust.

In Fig. 2(b), by supplying the pulse current to coils 6a and 6b in the same direction as shown in Fig. 2(a), and also, supplying this pulse current to coils 7a and 7b in the opposite direction against the direction shown in Fig. 2(a), magnetic flux φ₂ is thus generated in the arrow direction as shown in Fig. 2(b). As a result, the magnetic field acts on pole teeth 14a and 15b facing rectangular teeth 1a to produce the magnetic thrust.

In Fig. 2(c), by supplying the pulse current to coils 6a and 6b in the opposite direction against the direction shown in Fig. 2(b), and supplying this pulse current to coils 7a and 7b in the same direction as shown in Fig. 2(b), magnetic flux φ₃ is thus generated in the arrow direction as shown in Fig. 2(c). As a result, the magnetic field acts on pole teeth 14b and 15b facing rectangular teeth la to produce the magnetic thrust.

Similarly, in Fig. 2(d), by supplying the pulse current to coils 6a and 6b in the same direction as shown in Fig. 2(c), and supplying this pulse current to coils 7a and 7b in the opposite direction against the direction shown in Fig. 2(c), magnetic flux φ₄ is thus generated in the arrow direction as shown in Fig. 2(d). As a result, the magnetic field acts on pole teeth 14b and 15a facing rectangular teeth 1a to produce the magnetic thrust.

Accordingly, the pulse current is, in turn, supplied to respective coils 6a, 6b, 7a, and 7b in the order of such Fig. 2(a), Fig. 2(b), Fig. 2(c), and Fig. 2(d). This allows primary member 2 to travel toward the right direction on the drawings, that is, from magnetic pole 4a to magnetic pole 5b. While the pulse current is, in turn, supplied to respective coils in order of such Fig. 2(d), Fig. 2(c), Fig. 2(b), and Fig. 2(a), causing primary member 2 to travel toward the left direction on the drawing, that is, from magnetic pole 5b to magnetic pole 4a. The motor of Figures 1 and 2 is of a type disclosed in the reference FR-A- 2 606 951.

Generally, such a linear pulse motor is thus used without closed-loop control circuit for accurately positioning an object at a certain position, which makes use of a driving device for office automation equipments such as a printer. However, it is difficult to use for such as an industrial robot because of the high magnetic thrust required.

According to the linear pulse motor described in the above, in Fig. 2(a), while generating the magnetic thrust at magnetic poles 4a and 5a, each of the magnetic flux is counteracted at magnetic poles 4b and 5b, respectively. The magnetic thrust is thus not generated at magnetic poles 4b and 5b. The similar magnetic thrusts are generated at magnetic poles 4a and 5b in Fig. 2(b), magnetic poles 4b and 5b in Fig. 2(c), and magnetic poles 4b and 5a in Fig. 2(d). As a result, the area of magnetic poles 4a, 4b, 5a, and 5b which can generate the magnetic thrust is, only 50% area thereof. This area is significant to produce the magnetic thrust.

### SUMMARY OF THE INVENTION

It is accordingly an object of the present invention to provide a strong magnetic thrust force type actuator capable of effectively using area of the magnetic poles to produce a large magnetic thrust.

In a first aspect of the present invention, there is provided in a strong magnetic thrust force type actuator which comprises:
a primary magnetic member supported by a support means moving along a predetermined direction, the primary magnetic member generating a magnetic field in a direction transverse to the predetermined direction through magnetic poles thereof; and
a secondary magnetic member having a plurality of facing portions facing the primary magnetic member, in which the facing portions are disposed at an equal pitch in the predetermined direction, thus moving the primary magnetic member relative to the secondary magnetic member when a magnetic field acts upon the facing portions formed with the secondary magnetic member,
said strong-magnetic-thrust-force-type actuator being characterized in that said primary magnetic member further comprises:
cores having a plurality of plate members separated by first equal pitches in the predetermined direction, in which said plate members have facing portions extending in a direction transverse to the predetermined direction;
a plurality of permanent magnets inserted between side surfaces of the plate members in a direction perpendicular to the facing portions so that adjacent permanent magnets are of an opposite polarity; and
an insulated wire wound around the cores so as to form magnetic poles, and wherein
said secondary magnetic member further comprises:
facing portions facing the facing portions formed with the primary magnetic member, said facing portions disposed at a second equal pitch in the predetermined direction, said second equal pitch of the facing portion formed with the secondary magnetic member is approximately twice as large as the first equal pitch of the facing portion formed with the primary magnetic member,
whereby when the insulated wire is energized, said facing portions of the primary magnetic member which are disposed toward the facing portions formed with the secondary magnetic member contribute to produce a magnetic thrust for moving the primary magnetic member relative to the secondary magnetic member.

In a second aspect of the present invention, there is provided in a strong magnetic thrust force type actuator which comprises :
a primary magnetic member supported by a support means for movement along a predetermined direction, the primary magnetic member generating a magnetic field in a direction transverse to the predetermined direction through magnetic poles thereof; and
a secondary magnetic member having a plurality of facing portions facing the primary magnetic member, in which the facing portions are disposed at an equal pitch in the predetermined direction, thus moving the primary magnetic member relative to the secondary magnetic member when a magnetic field acts upon the facing portions formed with the secondary magnetic member,
said strong-magnetic-thrust-force-type actuator being characterized in that said primary magnetic member further comprises:
a core having facing portions disposed at a first equal pitch in the predetermined direction and extending in a direction transverse to the predetermined direction; and
an insulated wire wound around the core so as to form magnetic poles, and wherein
said secondary magnetic member further comprises:
facing portions facing the facing portions formed with the core, said facing portions separated by a second equal pitch in the predetermined direction; and
a plurality of permanent magnets inserted between side surfaces of the facing portions in a perpendicular direction with respect to a facing surface of the facing portions so that adjacent permanent magnets are of an opposite polarity, and wherein said first equal pitch of the facing portions formed with the primary magnetic member is approximately twice as large as the second equal pitch of the facing portions formed with the secondary magnetic member,
whereby when the insulated wire is energized, said facing portions of the primary magnetic member which are disposed toward the facing portions formed with the secondary magnetic member contribute to produce a magnetic thrust for moving the primary magnetic member relative to the secondary magnetic member.

Accordingly, as long as facing portions formed with the primary magnetic member are faced to the facing portions formed with the secondary magnetic member, the magnetic field generated from all facing portions acts on the facing portions of secondary magnetic member, making a strong magnetic thrust to move the primary magnetic member relative to the secondary magnetic member.

### BRIEF DESCRIPTION OF THE DRAWINGS

Fig. 1 is a side view showing a prior art linear pulse motor;
Fig. 2 is a side view showing an operation of the said prior art linear pulse motor;
Fig. 3 is a perspective view showing a linear pulse motor in the first embodiment;
Fig. 4 is a side view showing the operation of the linear pulse motor;
Fig. 5 is a time chart showing the wave forms supplied to the coils;
Fig. 6 is a thrust vector chart showing the magnetic thrust;
Fig. 7 is a side view showing the operation of the linear pulse motor;
Fig. 8 is a plan view showing a linear pulse motor in the second embodiment;
Fig. 9 is a section view showing the linear pulse motor;
Fig. 10 is a perspective view showing a linear pulse motor in the third embodiment;
Fig. 11 is a side view showing the operation of the linear pulse motor;
Fig. 12(a) to Fig. 12(d) are side views showing the operation of the linear pulse motor;
Fig. 13(a) to Fig. 13(d) are side views showing the operation of the linear pulse motor;
Fig. 14 is a perspective view showing another type of the primary magnetic member;
Fig. 15 is a brief plan view showing another type of the secondary magnetic member;
Fig. 16 is a side view showing a linear pulse motor in the fourth embodiment;
Fig. 17(a) to Fig. 17(d) are side views showing the operation of the linear pulse motor;
Fig. 18(a) to Fig. 18(d) are side views showing another operation of the linear pulse motor;
Fig. 19 is a side view showing another type of the linear pulse motor;
Fig. 20 is a perspective view showing a linear pulse motor in the fifth embodiment;
Fig. 21 is a plan view showing teeth of respective magnetic poles as shown in Fig. 20;
Fig. 22(a) to Fig. 22(d) are side views showing the operation of the linear pulse motor;
Fig. 23 is a perspective view showing a linear pulse motor in the sixth embodiment;
Fig. 24 is a section view showing a disk-type pulse motor in the seventh embodiment;
Fig. 25 is an enlarged side view, partially cut away, of the rotor;
Fig. 26 is an enlarged side view, partially cut away, of the stator;
Fig. 27 is a perspective view showing another type of the primary magnetic member; and
Fig. 28 is a side view showing a another type of the primary magnetic member.

### DESCRIPTION OF THE PREFERRED EMBODIMENT

Hereinafter, an embodiment of the present invention is described by reference to drawings.

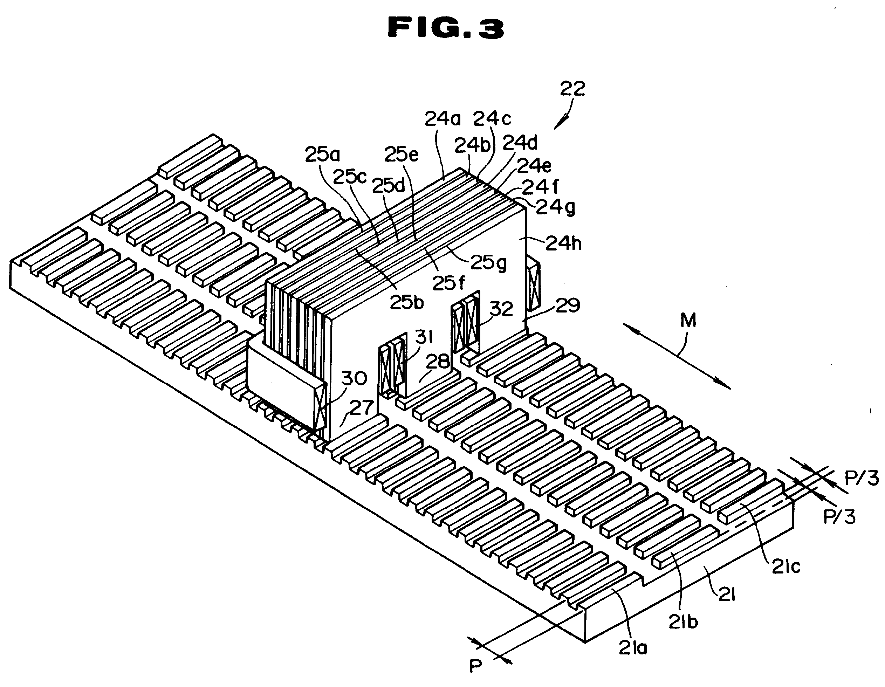

Fig. 3 shows a first embodiment of the invention as a strong magnetic thrust force type actuator. This strong magnetic thrust force type actuator is shown as a three-phase linear pulse motor. In this drawing, numeral 21 designates a secondary magnetic member at a fixed position, and numeral 22 designates a primary magnetic member movably supported by a support means such as rollers, wheels, or the like. Primary magnetic member 22 thus travels along the longitudinal direction, or the traveling direction shown by arrow M. The support means is omitted in Fig. 3.

In the upper side of secondary magnetic member 21, rectangular teeth 21a, 21b, and 21c are formed in the triple rows in a direction transverse to the longitudinal direction of secondary magnetic member 21, respectively. Respective rows of rectangular teeth 21a, 21b, and 21c are formed at equal space intervals in the direction transverse to the longitudinal direction, while each tooth of the rectangular teeth 21a, 21b, and 21c is formed at an equal pitch, as the distance of pitch P, in the longitudinal direction. In addition, each position of the rectangular teeth 21b is shifted by the distance of P/3 with respect to that of the rectangular teeth 21a, and each position of the rectangular teeth 21c is shifted by the distance of P/3 with respect to that of the rectangular teeth 21b.

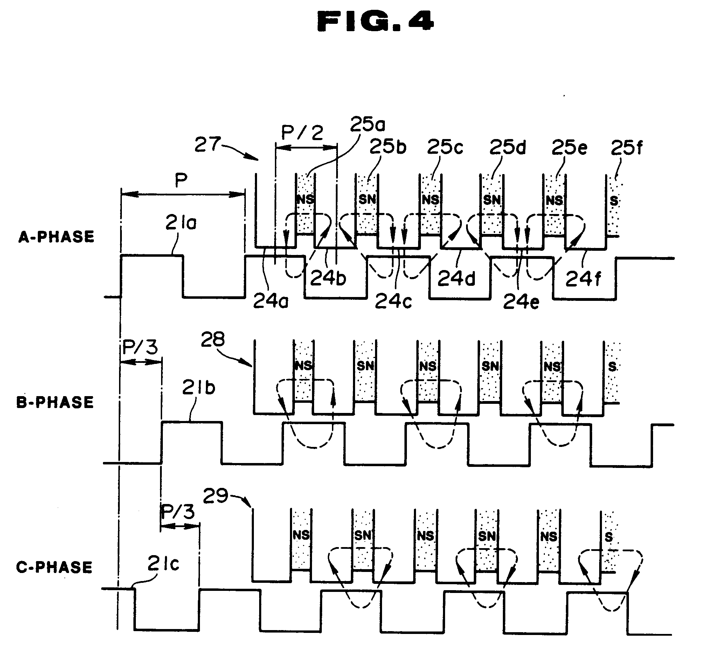

Primary magnetic member 22 comprises E-shaped cores 24a to 24h separated into the eight portions in the longitudinal direction, or traveling direction M; permanent magnets 25a to 25g inserted between cores 24a to 24h to fit whole surface area thereof so that each of the adjacent permanent magnets 25a to 25g is of an opposite polarity as shown in Fig. 4; coils 30 to 32 wound around the projection portions formed with as magnetic poles 27 to 29 which represent the A-phase, the B-phase, and the C-phase, respectively.

Fig. 4 shows that magnetic poles 27, 28, and 29 are faced to rectangular teeth 21a, 21b, and 21c, respectively, and corresponded to the A-phase, the B-phase, and the C-phase. In the A-phase, each of the teeth 21a is formed at the equal pitch as the distance of pitch P, while cores 24a to 24f which are illustrated a part thereof is formed at the equal pitch as the distance of P/2. Furthermore, in the B-phase, each of the rectangular teeth 21b is shifted by the distance of P/3 with respect to rectangular teeth 21a for the A-phase, and in the C-phase, each of the rectangular teeth 21c is shifted by the distance of P/3 with respect to rectangular teeth 21b.

Accordingly, when the pulse current is not supplied to the coils, each of the magnetic flux caused by permanent magnets 25a to 25f makes a magnetic flux loop between each of the cores 24a to 24f and the rectangular teeth 21a as shown by the broken lines in Fig. 4, that is, primary magnetic member 22 remains stationary.

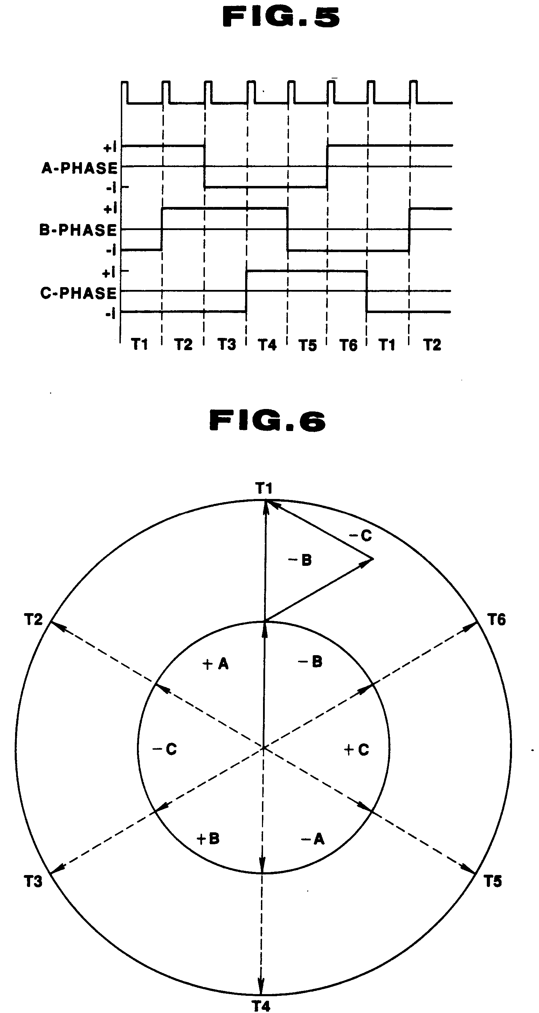

The operation of the three-phase linear pulse motor is described, when the pulse current is supplied to coil 30 for the A-phase, coil 31 for the B-phase, and coil 32 for the C-phase so that each polarity of the magnetic poles 27, 28, and 29 is inverted at a time. Each time interval is based on an exciting current sequence which is determined by the reference pulses shown in Fig. 5. That is, two of the three-phases become positive at every other reference pulses known as a bipolar driving system.

Fig. 6 shows a thrust vector diagram for the magnetic thrust which generates between magnetic poles 27 to 29 and rectangular teeth 21a to 21c. In this diagram, the +A represents a thrust vector caused by supplying a pulse current to coil 30 for the A-phase in the positive direction, and the -A represents a thrust vector caused by supplying the pulse current to coil 30 for the A-phase in the negative direction. Similarly, the +B and the +C represent respective thrust vectors caused by supplying the pulse current to coil 31 for the B-phase and coil 32 for the C-phase in the positive direction, respectively. The -B and the -C represent respective thrust vectors caused by supplying the pulse current to coil 31 for the B-phase and coil 32 for the C-phase in the negative direction, respectively.

Time interval T1 in Fig. 5, the pulse current is supplied to coil 30 for the A-phase in the positive direction, and the pulse current is supplied to coil 31 for the B-phase in the negative direction, and coil 32 for the C-phase in the negative direction. A magnetic thrust thus composed of thrust vector +A, thrust vector -B, and thrust vector -C to act between primary magnetic member 22 and secondary magnetic member 21.

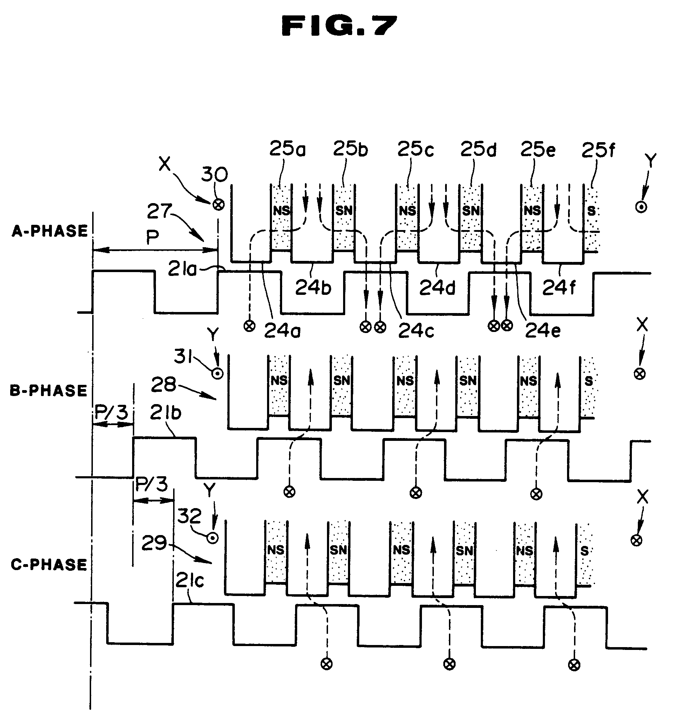

At this time, in Fig. 7, the pulse current flows point X to point Y corresponding to the coil 30 wound around magnetic pole 27 for the A-phase. This causes a magnetomotive force at cores 24a to 24f downwardly to generate a magnetic flux shown by the broken lines with the arrow direction. Each magnetic flux flows into each rectangular teeth 21a, and also flows into respective rectangular teeth 21a away from the observer. At the same time, the pulse current flows point X to point Y corresponding to the coil 31 wound around magnetic pole 28 for the B-phase, and coil 32 wound around magnetic pole 29 for the C-phase. This causes a magnetomotive force at cores 24a to 24f upwardly to generate a magnetic flux shown by the broken lines with the arrow direction. Each magnetic flux flows into cores 24b, 24d, and 24f. This magnetic flux thus flows from rectangular teeth 21b and 21c into respective cores 24b, 24d, and 24f, moreover, flowing into cores 24a, 24c, and 24e through permanent magnets 25a to 25f. As a result, as long as the pulse current flows in the coils wound around magnetic poles 27, 28, and 29, all cores 24a to 24h can contribute to produce a magnetic thrust.

Similarly, in Fig. 5, when the pulse current is, in turn, supplied to coils 30 to 32 in the order of T2, T3, T4, T5, and T6, a magnetic thrust is generated between respective magnetic poles 27 to 29, and respective rectangular teeth 21a to 21c. This vetor of the magnetic thrust is, in turn, changed in the order of T2, T3, T4, T5, and T6 to transfer the magnetic thrust to the next stage between primary magnetic member 22 and secondary magnetic member 21.

Consequently, in Fig. 7, the pulse current flows from point X to point Y of the coils 30, 31, and 32. The magnetic flux flows from cores 24a, 24c, and 24f into rectangular teeth 21a of secondary magnetic member 21. While each magnetic flux flows from rectangular teeth 21b and 21c of the secondary magnetic member 21 into cores 24b, 24d, and 24f, and also this magnetic flux flows into the adjacent cores 24a, 24c, and 24e through permanent magnets 25a to 25f. As a result, all cores can be made use of the production of the magnetic thrust which is much larger than the conventional thereof.

Accordingly, by supplying the pulse current to coils 30, 31, and 32 in the order of T1 to T6, primary magnetic member 22 travels along secondary magnetic member 21 or the right direction on Fig. 7, while supplying the pulse current in the order of T6 to T1, primary magnetic member 22 travels to the left direction on the drawing.

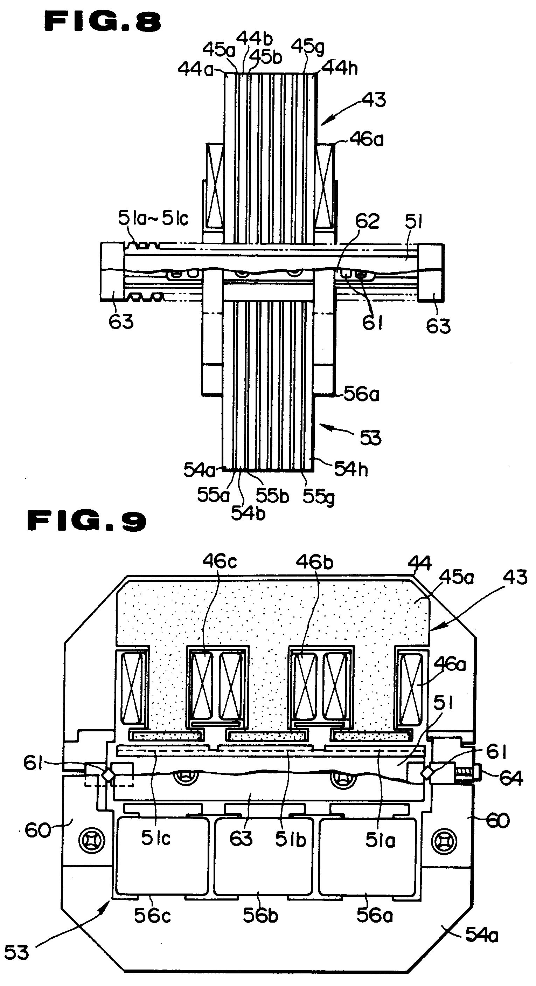

Figs. 8 and 9 show a second embodiment of the invention. This linear pulse motor is of a double-sided type. In these drawings, numeral 43 designates a first block having E-shaped cores 44a to 44h and permanent magnets 45a to 45g inserted between cores 44a to 44h so that each of the adjacent permanent magnets 45a to 45g is of an opposite polarity. Each projection of the E-shaped first block 43 is wound by coils 46a for the A-phase, 46b for the B-phase, and 46c for the C-phase to form magnetic poles. Numeral 53 designates a second block having E-shaped cores 54a to 54h similar to cores 44a to 44h, and permanent magnets 55a to 55g inserted between cores 54a to 54h. Each projection of the E-shaped second block 53 is wound by coils 56a for the A-phase, 56b for the B-phase, and 56c for the C-phase to form magnetic poles. Both first and second blocks 43 and 53 are connected by connecting plate 60, and the end surface of the first block 43, that is, the magnetic poles face the upper side of the secondary magnetic member 51, while the magnetic poles of the second block 53 face the lower side thereof. Both first and second blocks 43 and 53 thus travel along secondary magnetic member 51 movably supported by a linear bearing (cross-roller bearing) including roller 61 and retainer 62. In addition, the upper side of secondary magnetic member 51 has triple rows of rectangular teeth 51a, 51b, and 51c in the longitudinal direction thereof. Each shape of the rectangular teeth 51a, 51b, and 51c is similar to the one in the first embodiment, that is, each tooth of the rectangular teeth 51a, 51b, and 51c is formed at the equal pitch, as the distance of pitch P, in the longitudinal direction. Each position of the teeth 51b is shifted by the distance of P/3 with respect to that of teeth 51a, and each position of the teeth 51c is shifted by the distance of P/3 with respect to that of teeth 51b. The similar type of teeth are formed on the lower side of secondary magnetic member 51 as well. Numeral 63 designates a stopper for the first and second blocks 43 and 53 when traveling along secondary magnetic member 51, and numeral 64 designates a adjustable screw for the first and second blocks 43 and 53 to adjust the direction transverse to the longitudinal direction of secondary magnetic members 51. The order of polarity of permanent magnets 45a to 45g, and 55a to 55g, is not required to match with each other because the direction of the pulse current can be selectively supplied to coils 46a to 46c for the first block 43, and coils 56a to 56c for second block 53.

In the above first and second embodiments, the linear pulse motor is used as the three-phase. In the case where the number of rows of the rectangular teeth is changed, and the number of the magnetic poles is also changed, two-phase and four-phase, even more than four-phase linear pulse motor can be achieved.

Each position of the rectangular teeth is shifted by the distance of P/3 with respect to the rectangular teeth of the adjacent row in the above two embodiments. The magnetic pole can be shifted by the distance of P/3 with respect to the adjacent magnetic poles instead of the rectangular teeth.

Assuming that the three-phase alternating current is supplied to each coil instead of the pulse current, the linear pulse motor can be of synchronous motor.

Assuming that a displacement sensor is attached to the primary magnetic member to measure a displacement against the secondary magnetic member in the longitudinal direction, a servo-motor can be achieved.

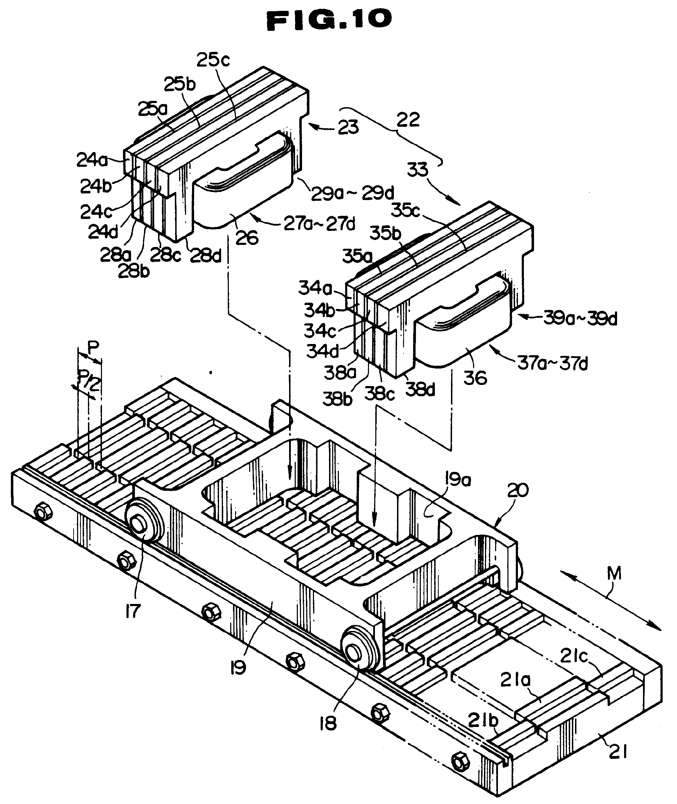

Fig. 10 shows a third embodiment of the invention. This linear pulse motor has A-phase block 23 and B-phase block 33 as primary magnetic member 22. Both A-phase block 23 and B-phase block 33 are fitted to frame 19 placed on secondary magnetic member 21.

In upper side of secondary magnetic member 21, triple-rows rectangular teeth 21a, 21b, and 21c are formed in in the direction transverse to the longitudinal direction of secondary magnetic member 21, respectively. Each tooth of the teeth 21a, 21b, and 21c is formed at the equal pitch, as the distance of pitch P, in the longitudinal direction and each position of the rectangular teeth 21a is shifted by the distance of P/2 with respect to that of both rectangular teeth 21b and 21c.

Frame 19 comprises opening 19a for receiving A-phase block 23 and B-phase block 33; and two pair of wheels 17 and 18 as support means 20 engaged to the rail. This frame 19 thus travels along secondary magnetic member 21 in the traveling direction shown by arrow M.

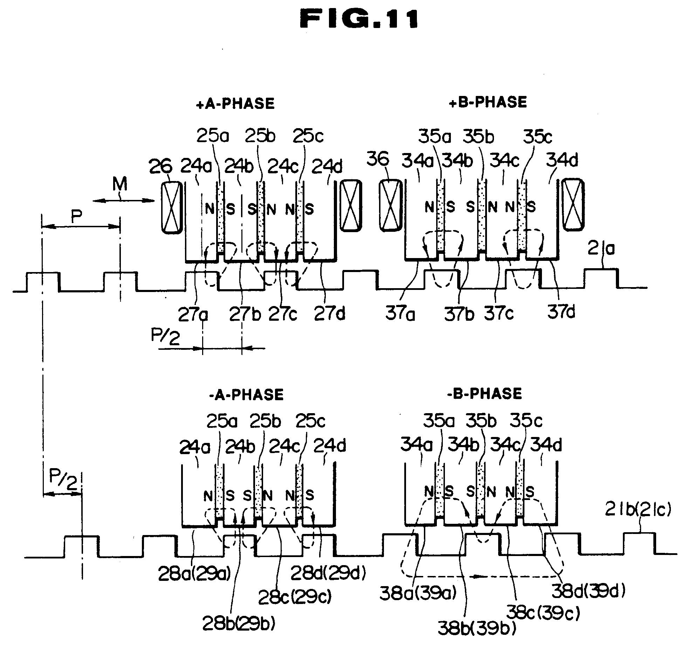

A-phase block 23 comprises E-shaped cores 24a to 24d separated into four portions in the longitudinal direction or traveling direction M; permanent magnets 25a to 25c inserted between cores 24a to 24d to fit whole surface area thereof so that each of the adjacent permanent magnets 25a to 25c is of an opposite polarity; A-phase coil 26 wound around the central projection portion of E-shaped cores 24a to 24d. Accordingly, the central projection portion of A-phase block 23 is formed with +A-phase magnetic poles 27a to 27d, both projection sides thereof are formed with -A-phase magnetic poles 28a to 28d, and another -A-phase magnetic poles 29a to 29d, respectively. In this case, when +A-phase magnetic poles 27a to 27d are faced to respective rectangular teeth 21a, both sides of -A-phase magnetic poles 28a to 28d and 29a to 29d are faced to both rectangular teeth 21b and 21c which are shifted by the distance of P/2 with respect to rectangular teeth 21a as shown in Fig. 11.

On the other hand, B-phase block 33 is a similar construction as A-phase block 23. B-phase block 33 therefore comprises E-shaped cores 34a to 34d; permanent magnets 35a to 35c inserted between cores 34a to 34d; and B-phase coil 36 wound around the central projection portion of E-shaped cores 34a to 34d. This B-phase block 33 is shifted by the distance of P/4 with respect to A-phase block 23 as shown in Fig. 11. In this case, the central projection portion of B-phase block 23 is formed with +B-phase magnetic poles 37a to 37d, both projection sides thereof are formed with -B-phase magnetic poles 38a to 38d, and another -B-phase magnetic poles 39a to 39d, respectively. When +B-phase magnetic poles 37a to 37d are faced to respective rectangular teeth 21a, both sides of -B-phase magnetic poles 38a to 38d, and 39a to 39d are faced to both rectangular teeth 21b and 21c which are shifted by the distance of P/2 with respect to rectangular teeth 21a as shown in Fig. 11. Accordingly, A-phase block 23 and B-phase block 33 remain stationary so that the magnetic flux caused by permanent magnets 25a to 25c, and 35a to 35c makes a magnetic flux loop as shown by the broken lines in Fig. 11.

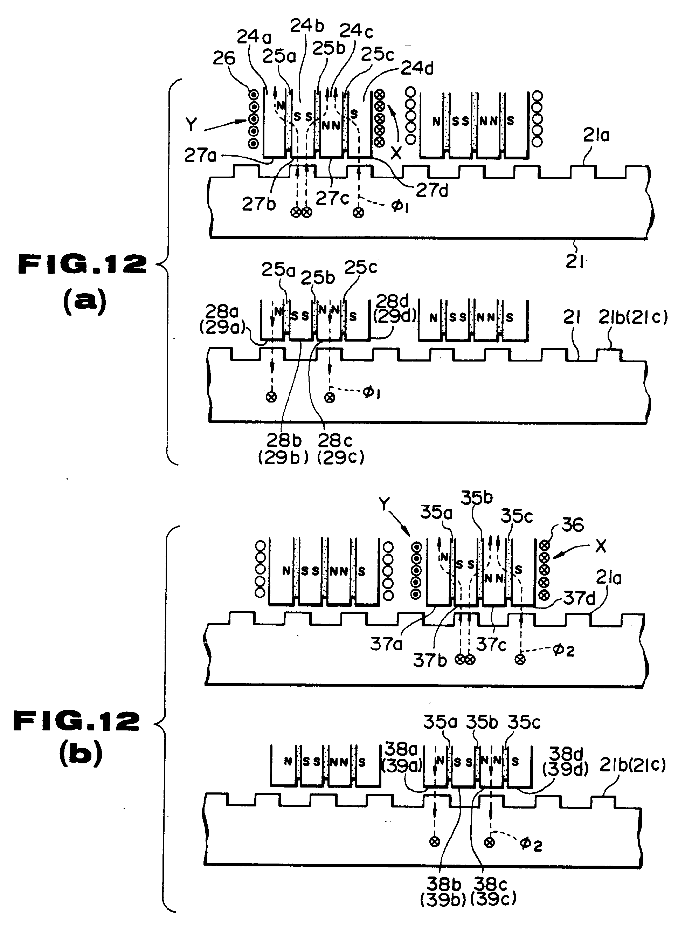

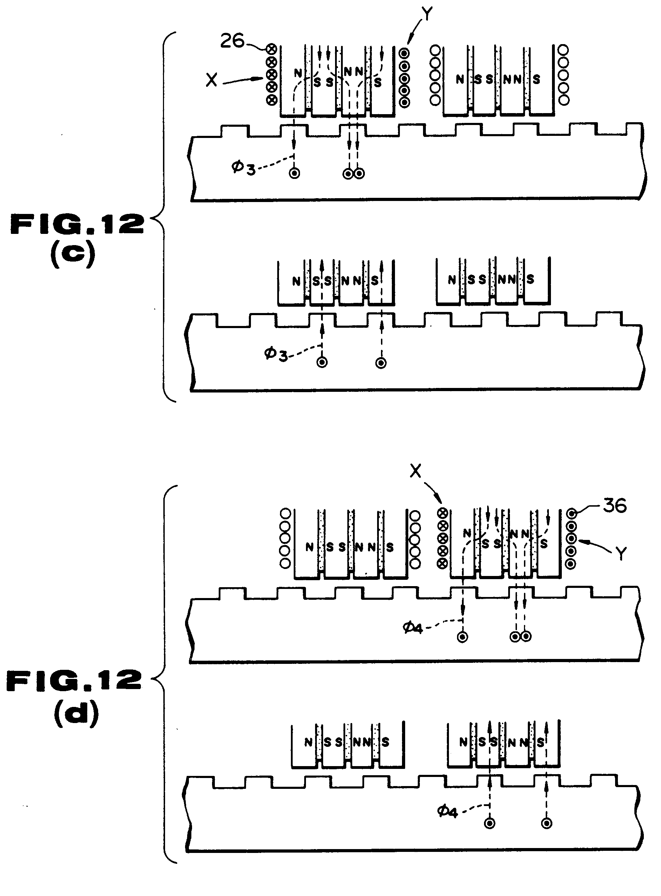

The operation of the linear pulse motor is described by reference to Fig. 12, in the case of the pulse current is supplied to either A-phase coil 26 or B-phase coil 36 in one direction to travel primary magnetic member 22 along secondary magnetic member 21, known as one-phase exciting system.

In Fig. 12(a), the pulse current flows from point X to point Y of A-phase coil 26. This causes a magnetomotive force at cores 24a to 24d, to generate a magnetic flux from +A-phase magnetic poles 27a to 27d, to -A-phase magnetic poles 28a to 28d and -A-phase magnetic poles 29a to 29d. This magnetic flux is circulated A-phase block 23 through secondary magnetic member 21. The magnetic flux coming from rectangular teeth 21a flows into +A-phase magnetic poles 27b and 27d, then into permanent magnets 25a to 25c, and comes out from permanent magnets 25a to 25c, and then into +A-phase magnetic poles 27a and 27c, and also into -A-phase magnetic poles 28a(29a) and 28c(29c), while A-phase magnetic poles 27a and 27c; and -A-phase magnetic poles 28b(29b) and 28d(29d) are non-acting against secondary magnetic member 21. Accordingly, the magnetic flux flows from rectangular teeth 21a to +A-phase magnetic poles 27b and 27d, and also flowing into the adjacent cores 24a and 24c through permanent magnets 25a to 25c. This makes magnetic flux loop φ₁ flowing from -A-phase magnetic poles 28a(29a) and 28c(29c) to rectangular teeth 21b(21c). As a result, when +A-phase magnetic poles 27b and 27d are faced right above rectangular teeth 21a, and -A-phase magnetic poles 28a(29a) and 28c(29c) are faced right above rectangular teeth 21b(21c), all magnetic poles can contribute to produce a magnetic thrust.

In Fig. 12(b), the pulse current flows from point X to point Y corresponding to B-phase coil 36. This makes magnetic flux loop φ₂ in accordance with the similar flow of the magnetic flux already described the above. As a result, when +B-phase magnetic poles 37b and 37d are faced right above rectangular teeth 21a, and -B-phase magnetic poles 38a(39a) and 38c(39c) are faced right above rectangular teeth 21b(21c), all magnetic poles can contribute to produce the magnetic thrust.

In Fig. 12(c), the pulse current flows in A-phase coil 26 in the opposite direction in contrast to the direction shown in Fig. 12(a). This makes magnetic flux loop φ₃. As a result, when +A-phase magnetic poles 27a and 27c are faced right above rectangular teeth 21a, and -A-phase magnetic poles 28b(29b) and 28d(29d) are faced right above rectangular teeth 21b (21c), all magnetic poles can contribute to produce the magnetic thrust.

In Fig. 12(d), the pulse current flows in B-phase coil 36 in the opposite direction to the direction shown in Fig. 12(b). This makes magnetic flux loop φ₄. As a result, when +B-phase magnetic poles 37a and 37c are faced right above rectangular teeth 21a, and -B-phase magnetic poles 38b(39b) and 38d(39d) are faced right above rectangular teeth 21b (21c), all magnetic poles can contribute to produce the magnetic thrust.

Accordingly, by supplying the pulse current to the coils in the order of Fig. 12(a), Fig. 12(b), Fig. 12(c), Fig. 12(d), and Fig. 12(a), primary magnetic member 22 travels along secondary magnetic member 21 by the distance of P, toward the right direction on Fig. 12. While supplying the pulse current in the order of Fig. 12(d), Fig. 12(c), Fig. 12(b), and Fig. 12(a), primary magnetic member 22 travels along secondary magnetic member 21 by the distance of P, toward the left direction on Fig. 12.

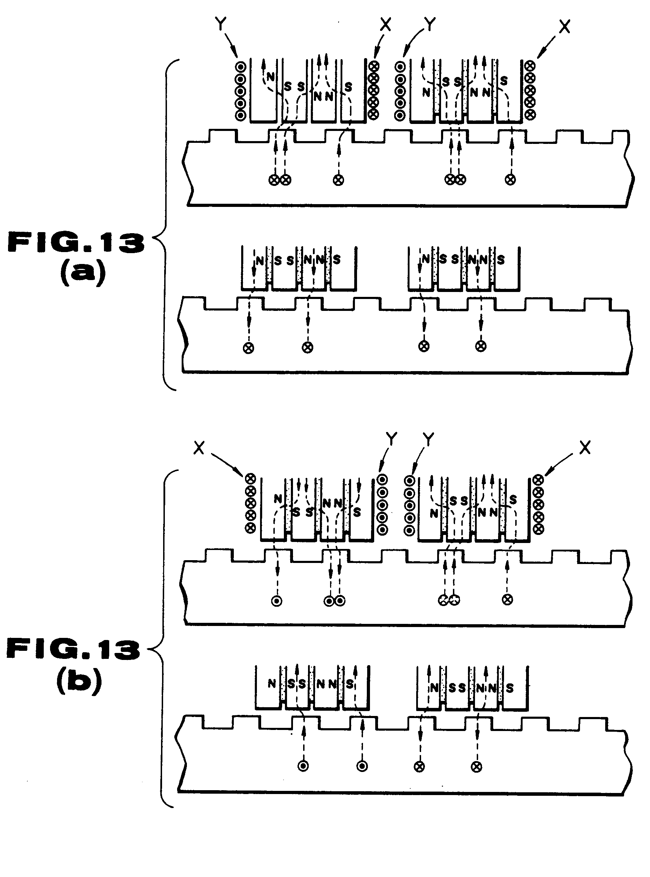

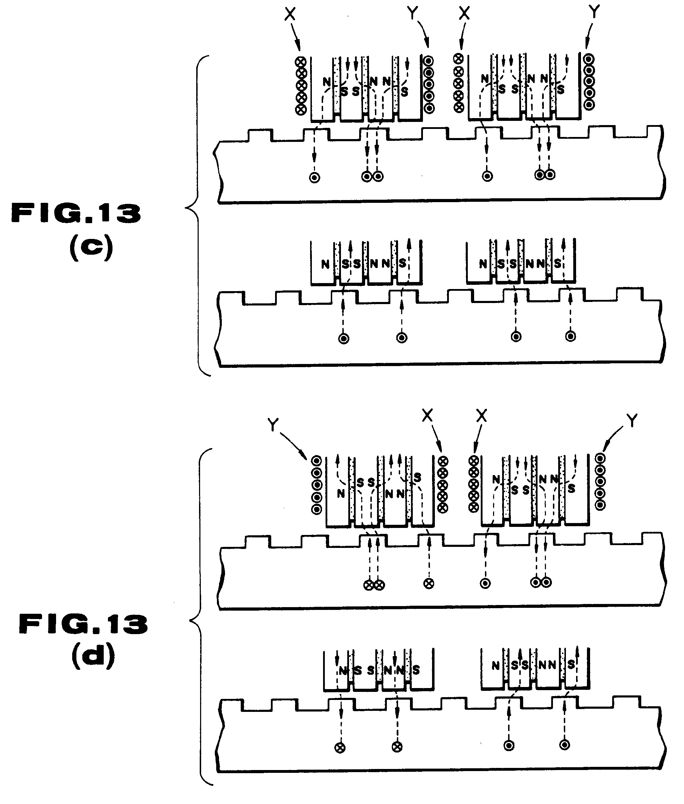

Assuming that primary magnetic member 22 travels along secondary magnetic members 21 by two-phase exciting system, the pulse current can be supplied from point X to point Y of A-phase coil 26 and B-phase coil 36 in the order of Fig. 13(a), Fig. 13(b), Fig. 13(c), and Fig. 13(d), or vise versa.

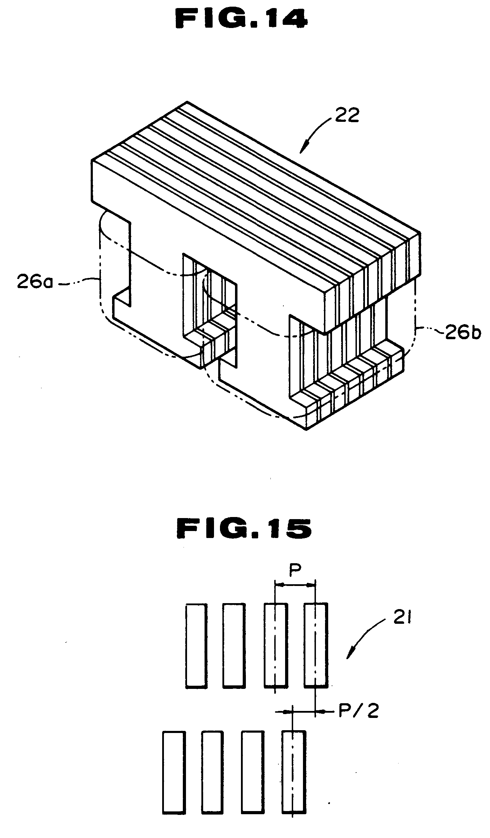

In the third embodiment, primary magnetic member 22 has three magnetic poles, but two magnetic poles can be used with wound coils 26a and 26b as shown in Fig. 14, in which each end portion of two magnetic poles has a widened end to face a large area of the secondary magnetic member. In this case, the position of respective rectangular teeth in one side is shifted by the distance of P/2 with respect to that of respective rectangular teeth in the other side as shown in Fig. 15.

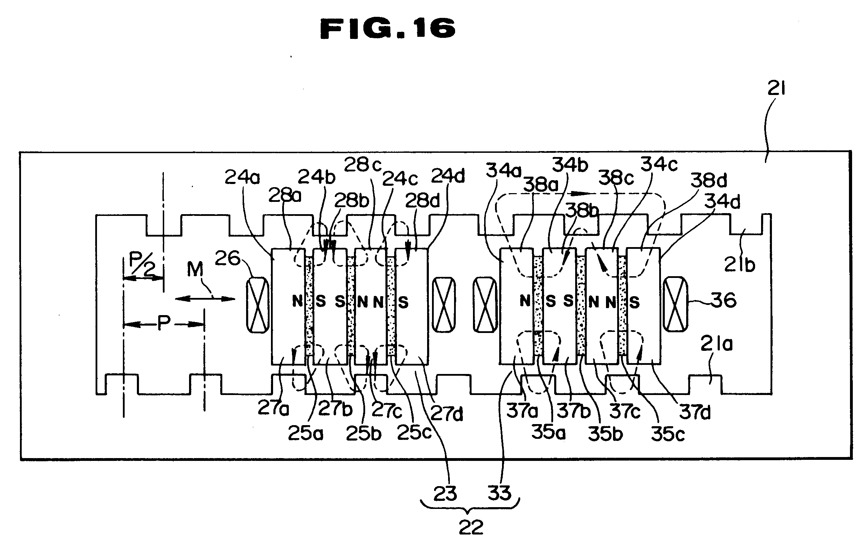

Fig. 16 shows a fourth embodiment of the invention. In this drawing, secondary magnetic member 21 is a rectangular frame type. The inner and lower side of secondary magnetic member 21 has rectangular teeth 21a formed at the equal pitch, as the distance of pitch P, in the longitudinal direction. While the inner and upper side of secondary magnetic member 21 has rectangular teeth 21b formed at the equal pitch, as the distance of pitch P, in the longitudinal direction, each of rectangular teeth 21b is shifted by the distance of P/2 with respect to each of the rectangular teeth 21a, and both rectangular teeth 21a and 21b are faced to each other.

Primary magnetic member 22 comprises A-phase block 23 and B-phase block 33, both of which are connected by a connecting member.

A-phase block 23 comprises cores 24a to 24d separated into four portions in the longitudinal direction, or traveling direction M; permanent magnets 25a to 25c inserted between cores 24a to 24d so that each of the adjacent permanent magnets 25a to 25c is of an opposite polarity; and A-phase coil 26 wound around cores 24a to 24d. In addition, the upper surface of A-phase block 23 has A-phase magnetic poles 27a to 27d, and the lower surface thereof having -A-phase magnetic poles 28a to 28d, and each of the magnetic poles is positioned at the equal pitch as the distance of P/2. Accordingly, when A-phase magnetic poles 27a and 27c face rectangular teeth 21a, -A-phase magnetic poles 28b and 28d face rectangular teeth 21b, respectively.

B-phase block 33 is a similar construction as A-phase block 23. It comprises cores 34a to 34d; permanent magnets 35a to 35c; and B-phase coil 36. The lower surface of B-phase block 33 therefore has B-phase magnetic poles 37a to 37d, and the upper surface thereof having -B-phase magnetic poles 38a to 38d. In addition, B-phase block 33 is shifted by the distance of P/4 with respect to A-phase block 23. Accordingly, A-phase block 23 remains stationary on B-phase block 33 so that magnetic flux caused by permanent magnets 25a to 25c, and 35a to 35c make magnetic flux loops as shown by the broken lines in Fig. 16.

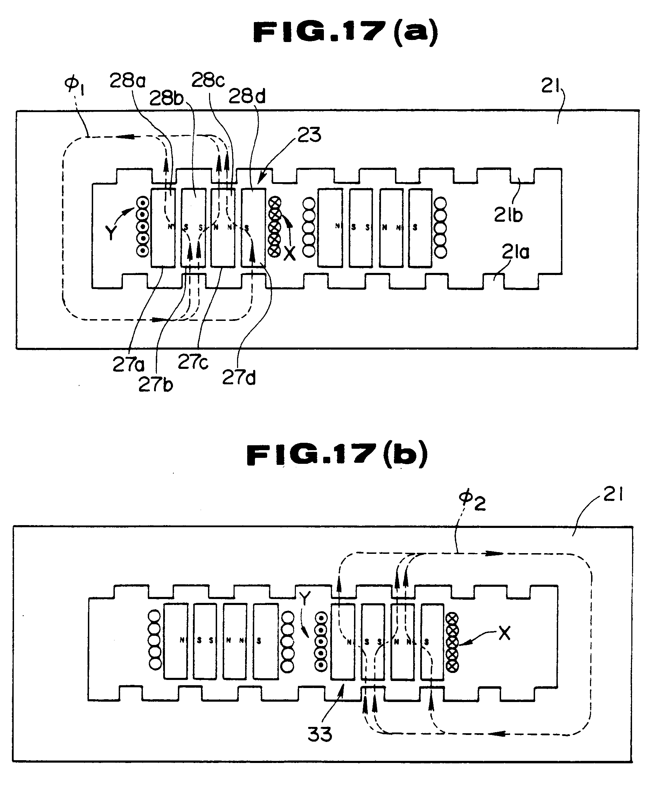

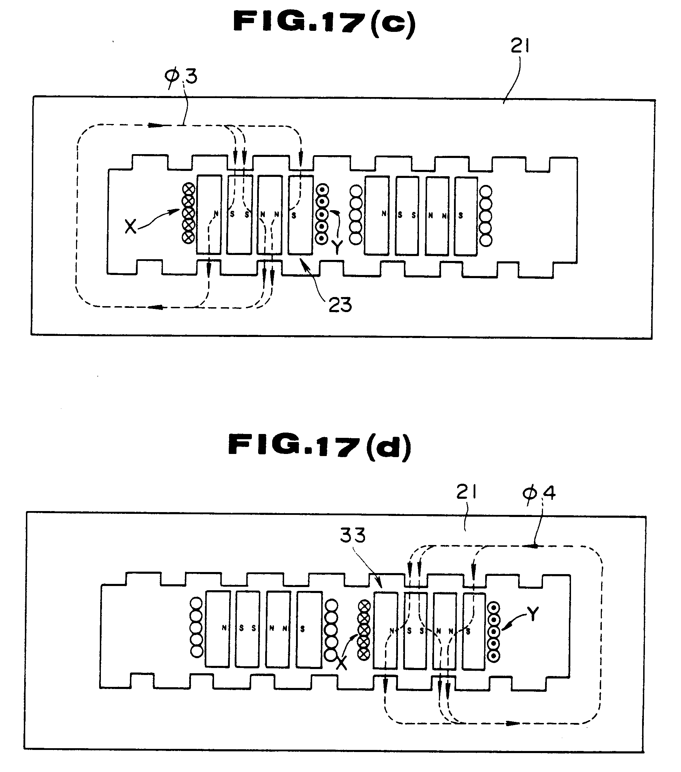

The operation of the linear pulse motor is described by reference to Fig. 17 in the case of one-phase exciting system.

In Fig. 17(a), the pulse current flows from point X to point Y corresponding to coil 26. This causes a magnetomotive force in cores 24a to 24d to generate a magnetic flux from +A-phase magnetic poles 27a to 27d, to -A-phase magnetic poles 28a to 28d. This magnetic flux enhances each other at +A-phase magnetic poles 27b and 27d, and -A-phase magnetic poles 28a and 28c, while -A-phase magnetic poles 28b and 28d are non-acting. This magnetic flux flows from rectangular teeth 21a to +A-phase magnetic poles 27b and 27d and to the adjacent cores 24a and 24d through permanent magnets 25a to 25c, then from -A-phase magnetic poles 28a and 28c to rectangular teeth 21b. This makes magnetic flux loop φ₁. As a result, when +A-phase magnetic poles 27b and 27d are faced right above rectangular teeth 21a, and -A-phase magnetic poles 28a and 28c are faced right above rectangular teeth 21b, all magnetic poles can contribute to produce a magnetic thrust.

In Fig. 17(b), the pulse current flows from point X to point Y corresponding to coil 36. This makes magnetic flux loop φ₂. As a result, when +B-phase magnetic poles 37b and 37d are faced right above rectangular teeth 21a, and -B-phase magnetic poles 38a and 38c are faced right above rectangular teeth 21b, all magnetic poles can contribute to produce a magnetic thrust.

In Figs. 17(c) and 17(d), magnetic flux loops φ₃ and φ₄ similarly makes a magnetic thrust. Accordingly, by supplying the pulse current to the coils in the order of Fig. 17(a), Fig. 17(b), Fig. 17(c), Fig. 17(d), and Fig. 17(a), primary magnetic member 22 travels along secondary magnetic member 21 by the distance of P, toward the left direction. While supplying the pulse current to the coils in the order of Fig. 17(d), Fig. 17(c), Fig. 17(b), Fig. 17(a), and Fig. 17(d), primary magnetic member 22 travels along secondary magnetic member 21 by the distance of P, toward the right direction.

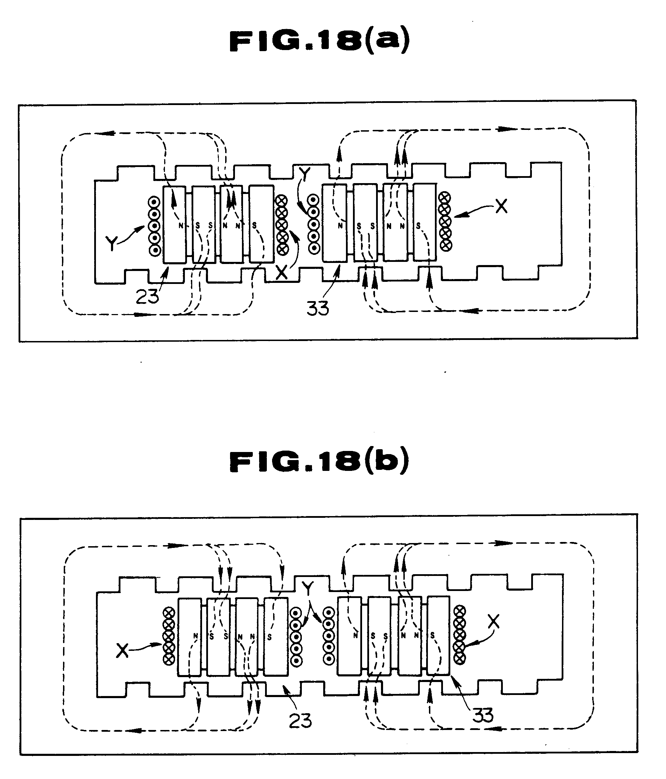

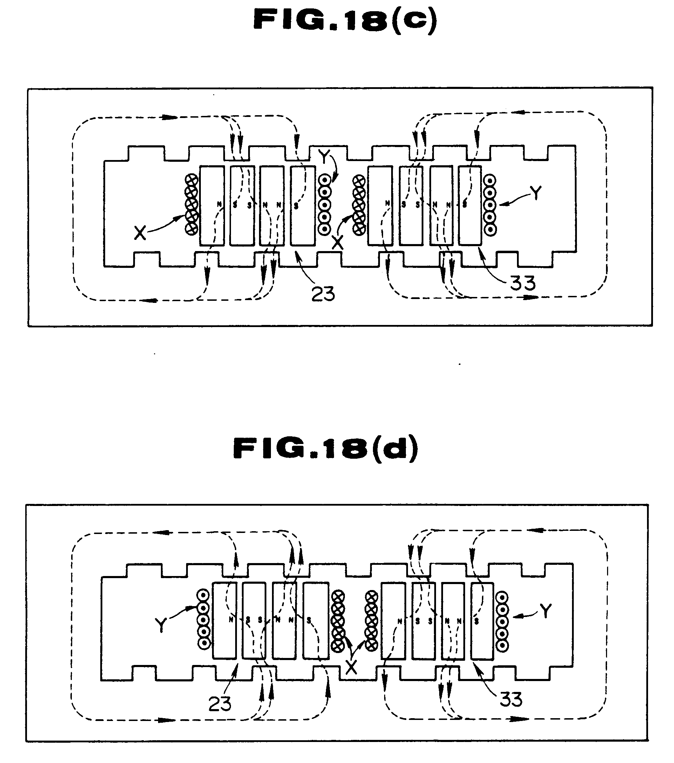

Assuming that this linear pulse motor is driven by two-phase exciting system, that is, the pulse current is supplied to both coils 26 and 36 from point X to point Y, magnetic flux loops are formed between primary magnetic member 22 and secondary magnetic member 21 as shown in Fig. 18. This also generates a large magnetic thrust.

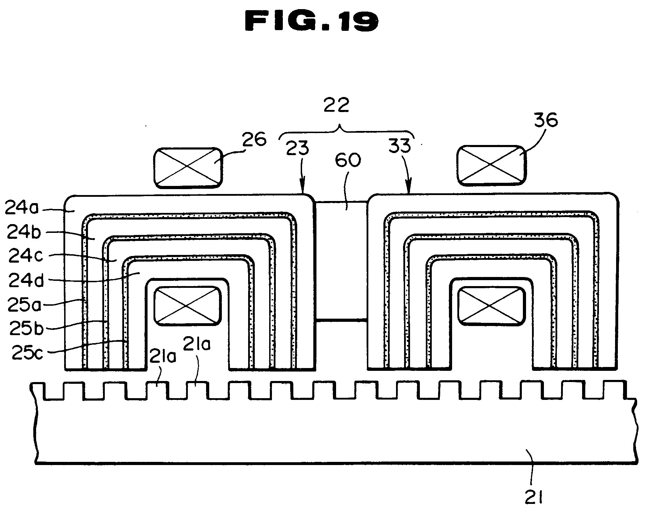

Fig. 19 shows the different type of primary magnetic member 22. This primary magnetic member 22 comprises A-phase block 23 and B-phase block 33. A-phase block 23 comprises U-shaped cores 24a, 24b, 24c, and 24d, each of which is laminated in the order of cores 24a, 24b, 24c, and 24d, the both end surfaces of which are faced to rectangular teeth 21a of secondary magnetic member 21; and coil 26 wound around the lateral portion of A-phase block 23. B-phase block 33 has a similar construction as A-phase block 23, and is connected with A-phase block 23 by connecting member 60.

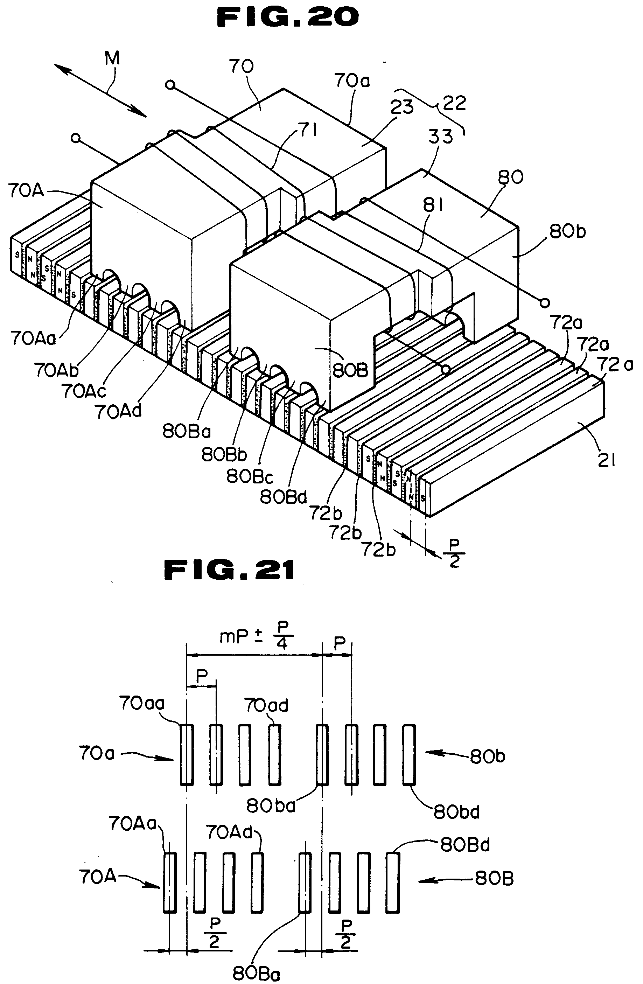

Fig. 20 shows a fifth embodiment of the invention. In this case, secondary magnetic member 21 has permanent magnets. In this drawing, primary magnetic member 22 comprises A-phase block 23 and B-phase block 33, both of which are connected by a connecting member and placed above secondary magnetic member 21 supported by the supporting means.

Secondary magnetic member 21 comprises a plurality of rectangular bars 72a made of the magnetic material, which are disposed in the traveling direction M so that their surfaces are lie in the horizontal plane; and permanent magnets 72b inserted between rectangular bars 72a to fit the most side surface area thereof so that each of the adjacent permanent magnets 72b is of an opposite polarity. In addition, Each pitch of the rectangular bars is the distance of P/2, in contrast to the distance of P for the teeth formed with primary magnetic member 22. This distance of P is described next.

In primary magnetic member 22, A-phase block 23 comprises C-shaped core 70 having +A-phase magnetic pole 70A and -A-phase magnetic pole 70a, both of which are faced to secondary magnetic member 21; and coil 71 wound around the lateral portion of core 70. Each of the +A-phase magnetic pole 70A and -A-phase magnetic pole 70a has teeth 70Aa, 70Ab, 70Ac, and 70Ad, then, 70aa, 70ab, 70ac, and 70ad, respectively. Respective teeth 70Aa, 70Ab, 70Ac, and 70Ad, then 70aa, 70ab, 70ac, and 70ad are formed at the equal pitch, as the distance of P, in the longitudinal direction, and also teeth 70Aa, 70Ab, 70Ac, and 70Ad are shifted by the distance of P/2 with respect to teeth 70aa, 70ab, 70ac, and 70ad in the longitudinal direction as shown in Fig. 21.

While B-phase block 33 is a similar construction as A-phase block 23 which has core 80 having +B-phase magnetic pole 80B and -B-phase magnetic pole 80b; and coil 81 wound around the lateral portion of core 80. Each of the magnetic poles +B-phase magnetic pole 80B and -B-phase magnetic pole 80b also has teeth 80Ba, 80Bb, 80Bc, and 80Bd, then 80ba, 80bb, 80bc, and 80bd, respectively. Similarly, all teeth of +B-phase magnetic pole 80B and -B-phase magnetic pole 80b are formed at the equal pitch, as the distance of P, in the longitudinal direction, and also teeth 80Ba, 80Bb, 80Bc, and 80Bd are shifted by the distance of P/2 with respect to the teeth of -B-phase magnetic pole 80b in the longitudinal direction as shown in Fig. 21. In the these cases, all grooves between the teeth are formed with a semicircular shape.

In Fig. 21, each pitch of the teeth is the distance of P in the longitudinal direction and the distance between teeth 70aa to teeth 80ba is the distance of mP±P/4 (where m is integer).

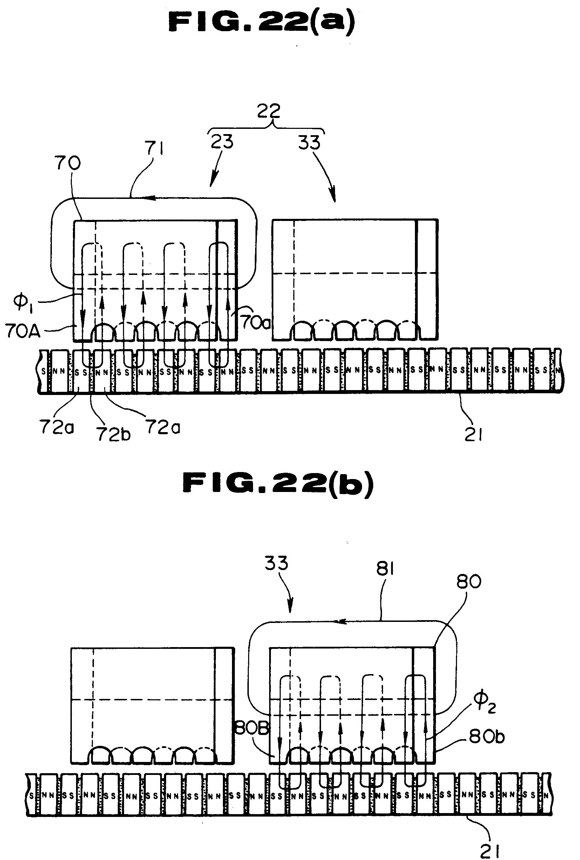

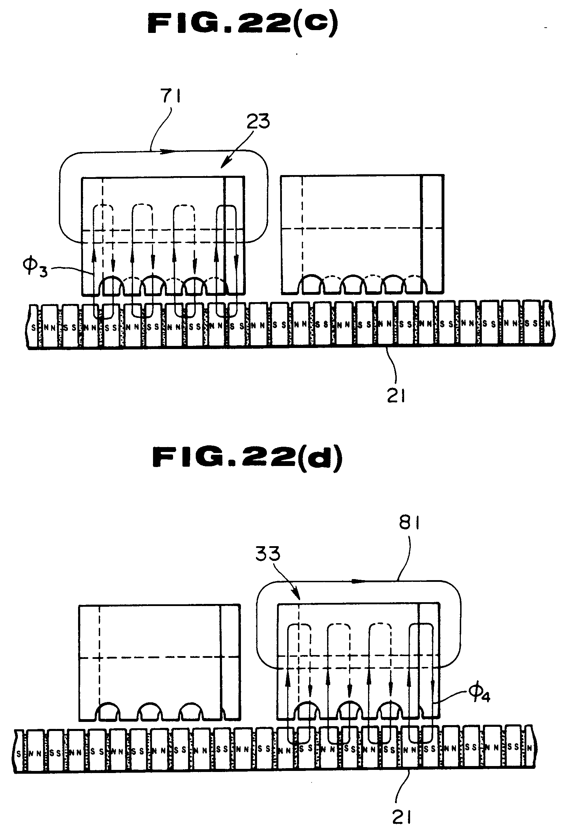

The operation of the linear pulse motor is described by reference to Fig. 22, in case of the pulse current is supplied to either coil 70 or 80 as the one-phase exciting system.

In Fig. 22(a), the pulse current flows in coil 71 in the direction as shown by the arrow. This causes a magnetomotive force at core 70 from -A-phase magnetic pole 70a to +A-phase magnetic pole 70A to generate magnetic flux loop φ₁. That is, this magnetic flux flows from teeth 70Aa, 70Ab, 70Ac, and 70Ad, to the S-pole side of rectangular bars 72a, and also flows into the N-pole side of adjacent rectangular bars 72a through permanent magnets 72b, and moreover, flows from rectangular bars 72a to teeth 70aa, 70ab, 70ac, and 70ad. As a result, when teeth 70Aa, 70Ab, 70Ac, 70Ad are faced right above the S-pole side of rectangular bars 72a, and teeth 70aa, 70ab, 70ac, and 70ad are faced right above the N-pole side of rectangular bars 72a, all teeth 70Aa, 70Ab, 70Ac, and 70Ad, then teeth 70aa, 70ab, 70ac, and 70ad can contribute to produce a magnetic thrust.

In Fig. 22(b), the pulse current flows in coil 81 in the direction as shown by the arrow. This makes magnetic flux φ₂. As a result, when teeth 80Ba, 80Bb, 80Bc, and 80Bd are faced right above the S-pole side of rectangular bars 72a, and teeth 80aa, 80ab, 80ac, and 80ad are faced right above the N-pole side of rectangular bars 72a, all teeth can contribute to produce a magnetic thrust.

In Fig. 22(c), the pulse current flows in coil 71 in the opposite direction with respect to Fig. 22(a). This makes magnetic flux φ₃. As a result, when teeth 70Aa. 70Ab. 70Ac. and 70Ad are faced right above the N-pole side of rectangular bars 72a, and teeth 70aa, 70ab, 70ac, and 70ad are faced right above the S-pole side of rectangular bars 72a, all teeth can contribute to produce a magnetic thrust.

Similarly, in Fig. 22(d), the pulse current flows in coil 81 in the opposite direction with respect to Fig. 22(b). This makes magnetic flux φ₄. As a result, when teeth 80Ba, 80Bb, 80Bc, and 80Bd are faced right above the N-pole side of rectangular bars 72a, and teeth 80ba, 80bb, 80bc, and 80bd are faced right above the S-pole side of rectangular bars 72a, all teeth can contribute to produce a magnetic thrust. Accordingly, primary magnetic member 22 travels along secondary magnetic member 21.

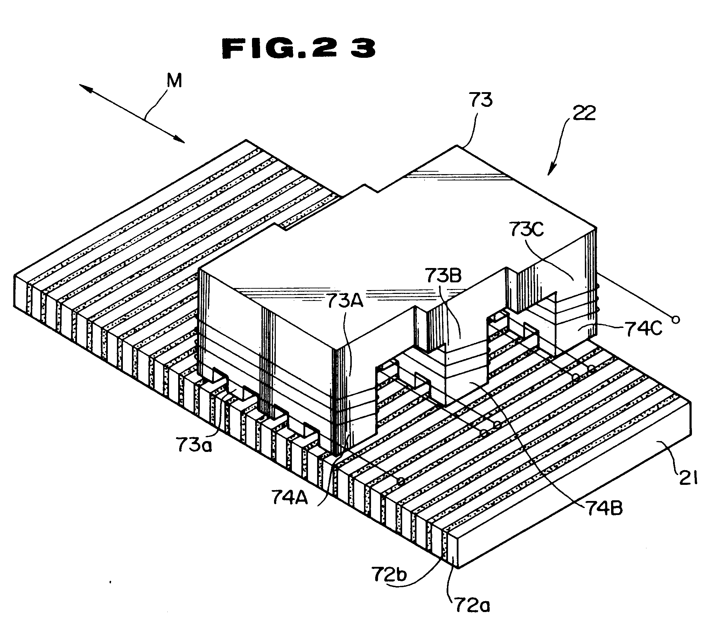

Fig. 23 shows a sixth embodiment of the invention.

In this embodiment, secondary magnetic member 21 is a similar construction described in the fifth embodiment, therefore, primary magnetic member 22 is only described as the sixth embodiment. This primary magnetic member 22 is of a three-phase type. This primary magnetic member 22 comprises A-phase magnetic pole 73A, B-phase magnetic pole 73B, and C-phase magnetic pole 73C, each of which has teeth 73a formed at the equal pitch, as the distance of P, in the longitudinal direction, and each of which is wound by coils 74A, 74B, and 74C, respectively. In addition, B-phase magnetic pole 73B is shifted by the distance of P/3 with respect to A-phase magnetic pole 73A, and C-phase magnetic pole 73C is shifted by the distance of P/3 with respect to B-phase magnetic pole 73B in the longitudinal direction. Consequently, when teeth 73a of A-phase magnetic pole 73A are faced to rectangular bars 72a, teeth 73a of B-phase magnetic pole 73B is shifted by the distance of P1/3 with respect to rectangular bars 72a, and teeth 73a of C-phase magnetic pole 73C is shifted by the distance of P2/3 with respect to rectangular bars 72a.

When a pulse current is supplied to respective coils 74A, 74B, and 74C, primary magnetic member 22 travels along secondary magnetic member 21 in accordance with the similar manner which is already described by reference to Fig. 5 and Fig. 6 in the first embodiment. In this case, all teeth 73a can also contribute to produce a magnetic thrust.

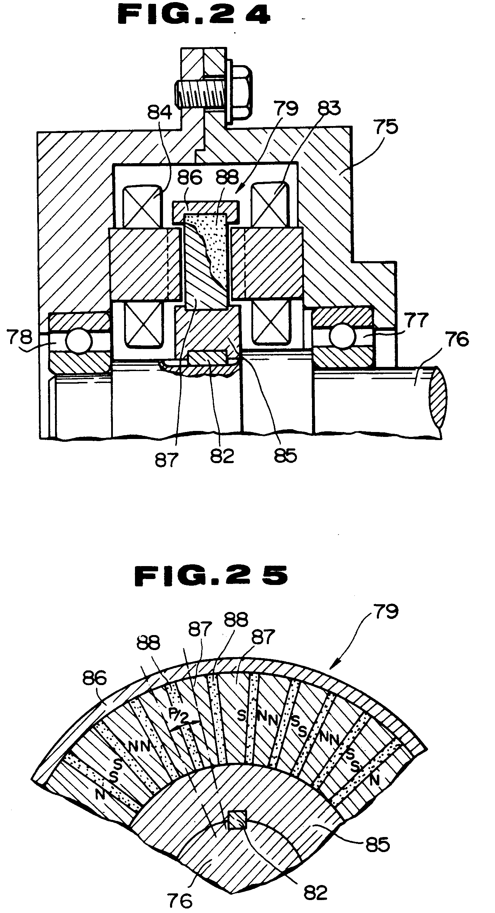

Fig. 24 shows a seventh embodiment of the invention. A pulse motor in this embodiment is of a disk-rotor type driven by the disk rotor. In the drawing, numeral 75 designates a housing, and numeral 76 designates a shaft rotatably bearing to housing 75 through bearings 77 and 78. In housing 75, shaft 76 has disk-like rotor 79. This rotor 79 is formed around the outer peripheral surface of annular member 85, and this annular member 85 is fixed to shaft 76 by key 82. In addition, the annular type of stators 83 and 84 are fixed to the inside walls of housing 75 so that both lateral surfaces of rotor 79 face stators 83 and 84.

The details of rotor 79 shows in Fig. 25. In the peripheral surface of annular member 85, segments 87 are extended to the radial direction and with alternating at an equal arc length such as fan blades. These segments 87 are formed with an outer arc longer than an inner arc. Permanent magnets 88 are inserted into spaces between segments 87 so that each of the adjacent permanent magnets 88 is of an opposite polarity. Then, the peripheral surfaces of segments 87 and permanent magnets 88 are covered by outer annular member 86.

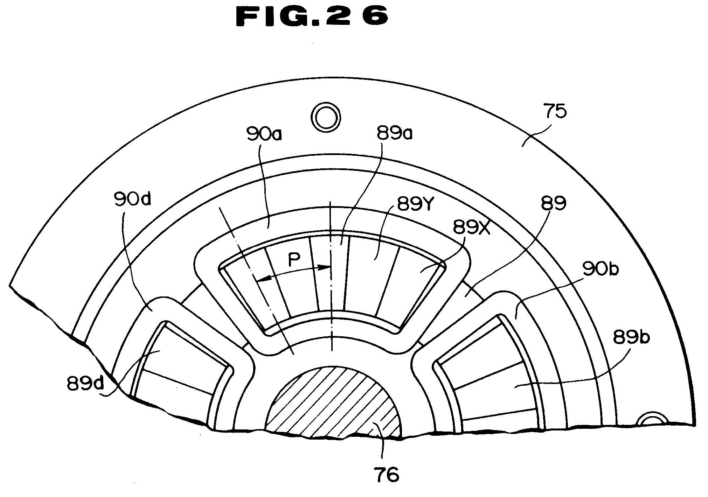

Fig. 26 shows the details of stator 83 partially. Stator 83 comprises an annular type core 89 having rectangular teeth 89X and groove 89Y formed with these alternating at equal intervals, and disposed in the radial direction; and coils 90a to 90d wound around core 89 so that three rectangular teeth 89X are surrounded by one wound coil 89 to form magnetic poles 89a to 89d.

In Fig. 25 and Fig. 26, each of the rectangular teeth 89X is formed at an equal arc length as the distance of P, while each of the segments 87 is formed at the equal arc length as the distance of P/2. Magnetic pole 89c is not shown in Fig. 26 because of the side view, partially cut away. This pulse motor is rotated by the same principle, which is already described by reference to Fig 22 in the fifth embodiment.

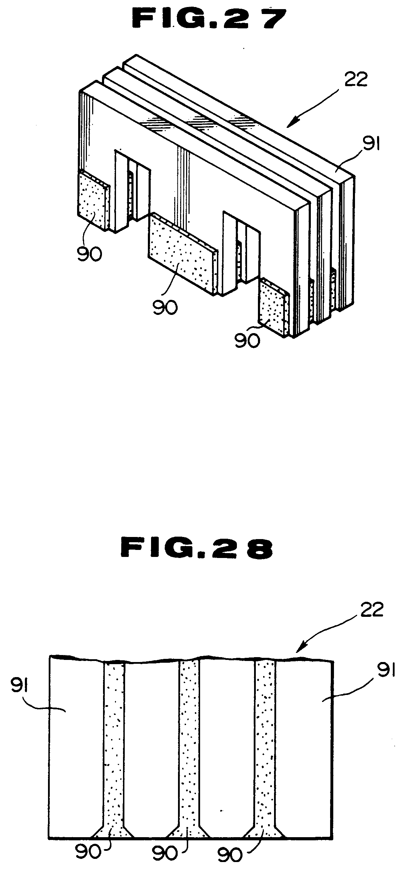

Fig. 27 shows another type of primary magnetic member 22. In the case where a sufficient magnetic force can be produced to travel primary magnetic member 22 along secondary magnetic member 21, small lateral surface of permanent magnets 90 can be inserted between cores 91. In the spaces between cores 91 except for permanent magnets 90, these spaces can be remained as shown in Fig. 27, and also, a non-magnetic material such as stain-less steel plates can be inserted therebetween to prevent magnetic flux which flows into the adjacent cores 91. This stain-less steel can also be in the purpose of a mechanical support.

Fig. 28 shows another different shape of permanent magnets 90 inserted between cores 91 of the primary magnetic member. These permanent magnets 90 have a widened end to make a good passing of magnetic flux to the teeth of the secondary magnetic member. These type of permanent magnets 90 can be inserted into the secondary magnetic member, in this case, the widened ends are faced to the primary magnetic member.

The preferred embodiment described herein is illustrative; the scope of the invention is indicated by the appended claims and all variations which fall within the claims are intended to be embraced therein.

## Claims

1. A strong-magnetic-thrust-force-type actuator which comprises:
a primary magnetic member (22) supported by a support means moving along a predetermined direction, the primary magnetic member generating a magnetic field in a direction transverse to the predetermined direction through magnetic poles thereof; and
a secondary magnetic member (21) having a plurality of facing portions facing the primary magnetic member, in which the facing portions are disposed at an equal pitch in the predetermined direction, thus moving the primary magnetic member relative to the secondary magnetic member when a magnetic field acts upon the facing portions formed with the secondary magnetic member,
said strong-magnetic-thrust-force-type actuator being characterized in that said primary magnetic member further comprises:
cores (24a, 24h) having a plurality of plate members separated by first equal pitches in the predetermined direction, in which said plate members have facing portions extending in a direction transverse to the predetermined direction;
a plurality of permanent magnets (25a,25g) inserted between side surfaces of the plate members in a direction perpendicular to the facing portions so that adjacent permanent magnets are of an opposite polarity; and
an insulated wire (30,32) wound around the cores (24a,24h) so as to form magnetic poles, and wherein
said secondary magnetic member further comprises:
facing portions (21a,21c) facing the facing portions formed with the primary magnetic member, said facing portions disposed at a second equal pitch in the predetermined direction, said second equal pitch of the facing portion formed with the secondary magnetic member is approximately twice as large as the first equal pitch of the facing portion formed with the primary magnetic member,
whereby when the insulated wire is energized, said facing portions of the primary magnetic member which are disposed toward the facing portions formed with the secondary magnetic member contribute to produce a magnetic thrust for moving the primary magnetic member relative to the secondary magnetic member.

2. A strong magnetic thrust force type actuator according to claim 1 wherein the permanent magnet inserted between the side surfaces of the plate members, in which an area of the permanent magnet partially occupies a perpendicular surface close to the facing portions.

3. A strong magnetic thrust force type actuator according to claim 2 wherein the non-occupied parts of the perpendicular surfaces between the plate members is inserted by a non-magnetic material.

4. A strong magnetic thrust force type actuator according to claim 1 wherein
the primary magnetic member comprises:
a core having a plurality of plate members separated by a first equal pitch in the predetermined direction, in which the plate members have three projections in a direction transverse to the predetermined direction, the projection having facing portions in the predetermined direction; and
an insulated wire wound around respective projections to form three magnetic poles, wherein
the secondary magnetic member comprises:
triple-row facing portions facing the facing potions formed with the three projections, respective triple-row facing portions disposed at a second equal pitch in the predetermined direction, in which each facing portion of the second row is shifted by 1/3 of the second equal pitch with respect to each facing portion of a first row, and each facing portion of the third row is shifted 1/3 of the second equal pitch with respect to each facing portion of the second row in the predetermined direction.

5. A strong magnetic thrust force type actuator according to claim 1 wherein
the primary magnetic member comprises:
a core having a plurality of plate members separated by a first equal pitch in the predetermined direction, in which the plate members have three projections in a direction transverse to the predetermined direction, the projections having facing portions in the predetermined direction; and
an insulated wire wound around the middle projection to form magnetic poles, wherein
the secondary magnetic member comprises:
triplle-row facing portions facing to the facing portions formed with the three projections, respective triple-row facing portions disposed at the second equal pitch in the predetermined direction, in which each facing portion of the middle-row is shifted by 1/2 of the second equal pitch with respect to each facing portion of both rows in the predetermined direction.

6. A strong magnetic thrust force type actuator according to claim 5 wherein two identical primary magnetic members are connected by a connecting means at a predetermined distance therebetween in the predetermined direction.

7. A strong magnetic thrust force type actuator according to claim 1 wherein
the primary magnetic member comprises:
a core having a plurality of plate members separated at a first equal pitch in the predetermined direction, in which the plate members have two projections in a direction transverse to the predetermined direction, the projections having facing portions in the predetermined direction, wherein
the secondary magnetic member comprises:
double-row facing portions facing the facing portions formed with the two projections, respective double-row facing portions disposed at a second equal pitch in the predetermined direction, in which each facing portion of a second row is shifted by 1/2 of the second equal pitch with respect to each facing portion of the first row.

8. A strong magnetic thrust force type actuator according to claim 1 wherein
the primary magnetic member comprises:
a core comprising a plurality of U-shaped plates which are laminated to form two projections, each end face of which has facing portions separated by a first equal pitch in the predetermined direction, and the two identical primary magnetic members are connected by a connecting means with predetermined space intervals therebetween in the predetermined direction;
a permanent magnet having a U-shape inserted between the U-shaped plates so that each of the adjacent permanent magnets is of an opposite polarity; and
an insulated wire wound around the core to form magnetic poles, wherein
secondary magnetic member comprises:
single-row facing portions facing the facing portions formed with the two projections, the single-row facing portions disposed at a second equal pitch in the predetermined direction.

9. A strong magnetic thrust force type actuator according to claim 8 wherein the insulated wire is wound around a lateral potion of the core to form two magnetic poles.

10. A strong magnetic thrust force type actuator according to claim 1 wherein
the primary magnetic member comprises:
a core having a plurality of plate members separated by a first equal pitch in the predetermined direction, in which the plate members have parallel facing portions, which face each other back to back; and
an insulated wire wound around the whole plate members parallel to the predetermined direction, wherein
the secondary magnetic member comprises:
parallel facing portions, which face the facing portion formed with the plate members, and each of which is shifted by 1/2 of the second equal pitch with respect to each other.

11. A strong magnetic thrust force type actuator according to claim 10 wherein the two identical primary magnetic members are connected by a connecting means with predetermined space intervals therebetween in the predetermined direction.

12. A strong magnetic thrust force type actuator according to claim 1 wherein
the primary magnetic member comprises:
a core comprising two plate member groups, each of which is connected by a connecting means in the same plane so that the groups are at predetermined space intervals, each plate member of a plate member group is separated by a first equal pitch in the predetermined direction, each plate member group having a plurality of projections in a direction transverse to the predetermined direction, the projections having facing portions in the predetermined direction, thus each facing portion of the plate member groups face each other, wherein
the secondary magnetic member comprises:
two-sided facing portions, each of which faces each facing portion formed with each plate member group so that the two-sided facing portions are inserted into the predetermined space intervals between respective plate member groups.

13. A strong-magnetic-thrust-force-type actuator as recited in claim 1 wherein said secondary magnetic member has a rectangular frame shape so that said primary magnetic member is inserted within said secondary magnetic member, whereby responsive to the alternatively varied current flown through the insulated wire, said primary magnetic member is moved within said secondary magnetic member in a reciprocating manner.

14. A strong-magnetic-thrust-force-type actuator which comprises:
a primary magnetic member (22) supported by a support means for movement along a predetermined direction, the primary magnetic member generating a magnetic field in a direction transverse to the predetermined direction through magnetic poles thereof; and
a secondary magnetic member (21) having a plurality of facing portions facing the primary magnetic member, in which the facing portions are disposed at an equal pitch in the predetermined direction, thus moving the primary magnetic member relative to the secondary magnetic member when a magnetic field acts upon the facing portions formed with the secondary magnetic member,
said strong-magnetic-thrust-force-type actuator being characterized in that said primary magnetic member (22) further comprises:
a core (70,80) having facing portions (70Aa,70Ad,80Ba,80Bd) disposed at a first equal pitch in the predetermined direction and extending in a direction transverse to the predetermined direction; and
an insulated wire (71,81) wound around the core so as to form magnetic poles, and wherein
said secondary magnetic member (21) further comprises:
facing portions (72a) facing the facing portions formed with the core, said facing portions (72a) separated by a second equal pitch in the predetermined direction; and
a plurality of permanent magnets (72b) inserted between side surfaces of the facing portions (72a) in a perpendicular direction with respect to a facing surface of the facing portions so that adjacent permanent magnets are of an opposite polarity, and wherein said first equal pitch of the facing portions formed with the primary magnetic member is approximately twice as large as the second equal pitch of the facing portions formed with the secondary magnetic member,
whereby when the insulated wire is energized, said facing portions of the primary magnetic member which are disposed toward the facing portions formed with the secondary magnetic member contribute to produce a magnetic thrust for moving the primary magnetic member relative to the secondary magnetic member.

15. A strong magnetic thrust force type actuator according to claim 14 wherein
the primary magnetic member comprises:
a core having three projections in a direction transverse to the predetermined direction, in which the projections having facing portions disposed at a first equal pitch in the predetermined direction, and a second projection of the three projections is shifted by 1/3 of the first equal pitch with respect to a first projection, and a third projection of the three projections is shifted by 1/3 of the first equal pitch with respect to the second projectidn in the predetermined direction.

16. A strong magnetic thrust force type actuator according to claim 14 wherein
the primary magnetic member comprises:
a core having two projections in a direction transverse to the predetermined direction, in which the projections have facing portions disposed at a first equal pitch in the predetermined direction, and a second projection of the two projections is shifted by 1/2 of the first equal pitch with respect to a first projection of the two projections in the predetermined direction.

17. A strong magnetic thrust force type actuator according to claim 14 wherein the primary magnetic member comprises:
an annular core having facing portions disposed at a first equal arc length in a rotating direction and extended to a radial direction;
an insulated wire wound along the annular core to form magnetic poles, wherein
the secondary magnetic member comprises:
the facing portions facing the facing portions formed with the annular core, the facing portions separated by a second equal arc length in the rotating direction; and
a permanent magnet inserted between side surfaces of the facing portions in the perpendicular direction to a facing surface of the facing portions so that each of the adjacent permanent magnets is of an opposite polarity, thus the first equal arc length of the facing portions formed with the annular core is about twice as large as the second equal arc length of the facing portions formed with the secondary magnetic member.

18. A strong magnetic thrust force type actuator according to claim 17 wherein each facing portion of two identical annular cores faces each side-by-side facing portion of the secondary magnetic member, and an axis of the secondary magnetic member is rotatably mounted on a shaft.

## Patentansprüche

1. Betätiger der Bauart mit starker magnetischer Schubkraft, der folgendes aufweist:
ein primäres magnetisches Element (22), das von einer Trageeinrichtung getragen wird, die sich entlang einer vorbestimmten Richtung bewegt, wobei das primäre magnetische Element durch seine Magnetpole ein Magnetfeld in einer Richtung transversal zu der vorbestimmten Richtung erzeugt; und
ein sekundäres magnetisches Element (21) mit einer Vielzahl von gegenüberliegenden Abschnitten, die dem primären magnetischen Element gegenüberliegen, wobei die gegenüberliegenden Abschnitte in der vorbestimmten Richtung in gleichen Abständen angeordnet sind, wodurch das primäre magnetische Element relativ zu dem sekundären magnetischen Element bewegt wird, wenn ein Magnetfeld auf die gegenüberliegenden Abschnitte einwirkt, die mit dem sekundären magnetischen Element ausgebildet sind,
wobei der Betätiger der Bauart mit starker magnetischer Schubkraft dadurch gekennzeichnet ist, daß das primäre magnetische Element weiterhin folgendes aufweist:
Kerne (24a, 24h) mit einer Vielzahl von Plattenelementen, die um erste gleiche Abstände in der vorbestimmten Richtung beabstandet sind, wobei die Plattenelemente gegenüberliegende Abschnitte haben, die sich in einer Richtung transversal zu der vorbestimmten Richtung erstrecken;
eine Vielzahl von Permanentmagneten (25a, 25g), die zwischen Seitenflächen der Plattenelemente in einer Richtung rechtwinklig zu den gegenüberliegenden Abschnitten eingefügt sind, so daß benachbarte Permanentmagnete eine entgegengesetzte Polarität aufweisen; und
einen isolierten Draht (30, 32), der um die Kerne (24a, 24h) gewickelt ist, um Magnetpole auszubilden, und wobei
das sekundäre magnetische Element weiterhin aufweist:
gegenüberliegende Abschnitte (21a, 21c), die den gegenüberliegenden Abschnitten gegenüberliegen, die mit dem primären magnetischen Element ausgebildet sind, wobei die gegenüberliegenden Abschnitte mit einem zweiten gleichen Abstand in der vorbestimmten Richtung angeordnet sind, wobei der zweite gleiche Abstand des gegenüberliegenden Abschnitts, der mit dem sekundären magnetischen Element ausgebildet ist, etwa zweimal so groß ist wie der erste gleiche Abstand des gegenüberliegenden Abschnitts, der mit dem primären magnetischen Element ausgebildet ist,
wobei dann, wenn der isolierte Draht stromführend ist, die gegenüberliegenden Abschnitte des primären magnetischen Elements, die in Richtung zu den gegenüberliegenden Abschnitten angeordnet sind, die mit dem sekundären magnetischen Element ausgebildet sind, dazu beitragen, einen magnetischen Schub zum Bewegen des primären magnetischen Elements relativ zu dem sekundären magnetischen Element zu erzeugen.

2. Betätiger der Bauart mit starker magnetischer Schubkraft nach Anspruch 1, wobei der Permanentmagnet zwischen den Seitenflächen der Plattenelemente eingefügt ist, wobei ein Bereich des Permanentmagneten eine senkrechte Oberfläche nahe den gegenüberliegenden Abschnitten abschnittweise belegt.

3. Betätiger der Bauart mit starker magnetischer Schubkraft nach Anspruch 2, wobei in die nicht belegten Teile der senkrechten Oberflächen zwischen den Plattenelementen ein nichtmagnetisches Material eingefügt ist.

4. Betätiger der Bauart mit starker magnetischer Schubkraft nach Anspruch 1, wobei
das primäre magnetische Element folgendes aufweist:
einen Kern mit einer Vielzahl von Plattenelementen, die um einen ersten gleichen Abstand in der vorbestimmten Richtung getrennt sind, wobei die Plattenelemente drei Vorsprünge in einer Richtung transversal zu der vorbestimmten Richtung haben, und wobei der Vorsprung gegenüberliegende Abschnitte in der vorbestimmten Richtung hat; und
einen isolierten Draht, der um jeweilige Vorsprünge gewickelt ist, um drei Magnetpole auszubilden, wobei
das sekundäre magnetische Element folgendes aufweist:
dreireihige gegenüberliegende Abschnitte, die den gegenüberliegenden Abschnitten gegenüberliegen, die mit den drei Vorsprüngen ausgebildet sind, entsprechende dreireihige gegenüberliegende Abschnitte, die in einem zweiten gleichen Abstand in der vorbestimmten Richtung angeordnet sind, wobei jeder gegenüberliegende Abschnitt der zweiten Reihe um 1/3 des zweiten gleichen Abstands in bezug auf jeden gegenüberliegenden Abschnitt einer ersten Reihe verschoben ist, und wobei jeder gegenüberliegende Abschnitt der dritten Reihe um 1/3 des zweiten gleichen Abstands in bezug auf jeden gegenüberliegenden Abschnitt der zweiten Reihe in der vorbestimmten Richtung verschoben ist.

5. Betätiger der Bauart mit starker magnetischer Schubkraft nach Anspruch 1, wobei
das primäre magnetische Element folgendes aufweist:
einen Kern mit einer Vielzahl von Plattenelementen, die um einen ersten gleichen Abstand in der vorbestimmten Richtung getrennt sind, wobei die Plattenelemente drei Vorsprünge in einer Richtung transversal zu der vorbestimmten Richtung haben, wobei die Vorsprünge gegenüberliegende Abschnitte in der vorbestimmten Richtung haben; und
einen isolierten Draht, der um den mittleren Vorsprung gewickelt ist, um Magnetpole auszubilden, wobei
das sekundäre magnetische Element folgendes aufweist:
dreireihige gegenüberliegende Abschnitte, die den gegenüberliegenden Abschnitten gegenüberliegen, die mit den drei Vorsprüngen ausgebildet sind, wobei jeweilige dreireihige gegenüberliegende Abschnitte mit dem zweiten gleichen Abstand in der vorbestimmten Richtung angeordnet sind, wobei jeder gegenüberliegende Abschnitt der mittleren Reihe um 1/2 des zweiten gleichen Abstands in bezug auf jeden gegenüberliegenden Abschnitt beider Reihen in der vorbestimmten Richtung verschoben ist.

6. Betätiger der Bauart mit starker magnetischer Schubkraft nach Anspruch 5, wobei zwei identische primäre magnetische Elemente durch eine Verbindungseinrichtung mit einem vorbestimmten Abstand dazwischen in der vorbestimmten Richtung verbunden sind.

7. Betätiger der Bauart mit starker magnetischer Schubkraft nach Anspruch 1, wobei
das primäre magnetische Element folgendes aufweist:
einen Kern mit einer Vielzahl von Plattenelementen, die mit einem ersten gleichen Abstand in der vorbestimmten Richtung getrennt sind, wobei die Plattenelemente zwei Vorsprünge in einer Richtung transversal zu der vorbestimmten Richtung haben, wobei die Vorsprünge gegenüberliegende Abschnitte in der vorbestimmten Richtung haben; wobei
das sekundäre magnetische Element folgendes aufweist:
doppelreihige gegenüberliegende Abschnitte, die den gegenüberliegenden Abschnitten gegenüberliegen, die mit den zwei Vorsprüngen ausgebildet sind, wobei jeweilige doppelreihige gegenüberliegende Abschnitte mit dem zweiten gleichen Abstand in der vorbestimmten Richtung angeordnet sind, wobei jeder gegenüberliegende Abschnitt einer zweiten Reihe um 1/2 des zweiten gleichen Abstands in bezug auf jeden gegenüberliegenden Abschnitt der ersten Reihen verschoben ist.

8. Betätiger der Bauart mit starker magnetischer Schubkraft nach Anspruch 1, wobei
das primäre magnetische Element folgendes aufweist:
einen Kern mit einer Vielzahl von U-förmigen Platten, die so laminiert sind, daß sie zwei Vorsprünge ausbilden, von denen jede Endfläche gegenüberliegende Abschnitte hat, die um einen ersten gleichen Abstand in der vorbestimmten Richtung getrennt sind,
wobei die zwei identischen primären magnetischen Elemente durch eine Verbindungseinrichtung mit vorbestimmten Abstandsintervallen dazwischen in der vorbestimmten Richtung verbunden sind;
einen Permanentmagneten mit einer U-Form, der zwischen den U-förmigen Platten eingefügt ist, so daß jeder der benachbarten Permanentmagneten eine entgegengesetzte Polarität hat; und
einen isolierten Draht, der um den Kern gewickelt ist, um Magnetpole auszubilden, wobei
das sekundäre magnetische Element folgendes aufweist:
einreihige gegenüberliegende Abschnitte, die den gegenüberliegenden Abschnitten gegenüberliegen, die mit den zwei Vorsprüngen ausgebildet sind, wobei die einreihigen gegenüberliegenden Abschnitte mit einem zweiten gleichen Abstand in der vorbestimmten Richtung angeordnet sind.

9. Betätiger der Bauart mit starker magnetischer Schubkraft nach Anspruch 8, wobei der isolierte Draht um einen lateralen Abschnitt des Kerns gewickelt ist, um zwei Magnetpole auszubilden.

10. Betätiger der Bauart mit starker magnetischer Schubkraft nach Anspruch 1, wobei
das primäre magnetische Element folgendes aufweist:
einen Kern mit einer Vielzahl von U-förmigen Platten, die um einen ersten gleichen Abstand in der vorbestimmten Richtung getrennt sind, wobei die Plattenelemente parallele gegenüberliegende Abschnitte haben, die einander Rücken an Rücken gegenüberliegen; und
einen isolierten Draht, der um die gesamten Plattenelemente parallel zu der vorbestimmten Richtung gewickelt ist, wobei
das sekundäre magnetische Element folgendes aufweist:
parallele gegenüberliegende Abschnitte, die den gegenüberliegenden Abschnitten gegenüberliegen, die mit den Plattenelementen ausgebildet sind, und von denen jeder um 1/2 des zweiten gleichen Abstands in bezug aufeinander verschoben ist.

11. Betätiger der Bauart mit starker magnetischer Schubkraft nach Anspruch 10, wobei die zwei identischen primären magnetischen Elemente durch eine Verbindungseinrichtung mit vorbestimmten Abstandsintervallen dazwischen in der vorbestimmten Richtung verbunden sind.

12. Betätiger der Bauart mit starker magnetischer Schubkraft nach Anspruch 1, wobei
das primäre magnetische Element folgendes aufweist:
einen Kern mit zwei Plattenelementen-Gruppen, von denen jede durch eine Verbindungseinrichtung in derselben Ebene verbunden ist, so daß die Gruppen vorbestimmte Abstandsintervalle aufweisen, wobei jedes Plattenelement einer Plattenelementen-Gruppe um einen ersten gleichen Abstand in der vorbestimmten Richtung getrennt ist, wobei jede Plattenelementen-Gruppe eine Vielzahl von Vorsprüngen in einer Richtung transversal zu der vorbestimmten Richtung hat, wobei die Vorsprünge gegenüberliegende Abschnitte in der vorbestimmten Richtung haben, weshalb jeder gegenüberliegende Abschnitt der Plattenelementen-Gruppen jedem anderen gegenüberliegt; wobei
das sekundäre magnetische Element folgendes aufweist:
zweiseitige gegenüberliegende Abschnitte, von denen jeder jedem gegenüberliegenden Abschnitt gegenüberliegt, der mit jeder Plattenelementen-Gruppe ausgebildet ist, so daß die zweiseitigen gegenüberliegenden Abschnitte in die vorbestimmten Abstandsintervalle zwischen jeweiligen Plattenelementen-Gruppen eingefügt sind.

13. Betätiger der Bauart mit starker magnetischer Schubkraft nach Anspruch 1, wobei das sekundäre magnetische Element eine rechtwinklige Rahmenform hat, so daß das primäre magnetische Element in das sekundäre magnetische Element eingefügt ist, wobei das primäre magnetische Element in Antwort auf den Wechselstrom, der durch den isolierten Draht fließt, in dem sekundären magnetischen Element hin und her bewegt wird.

14. Betätiger der Bauart mit starker magnetischerSchubkraft, das folgendes aufweist:
ein primäres magnetisches Element (22), das von einer Trageeinrichtung für eine Bewegung entlang einer vorbestimmten Richtung getragen wird, wobei das primäre magnetische Element durch seine Magnetpole in einer zu der vorbestimmten Richtung transversalen Richtung ein Magnetfeld erzeugt; und
ein sekundäres magnetisches Element (21) mit einer Vielzahl von gegenüberliegenden Abschnitten, die dem primären magnetischen Element gegenüberliegen, wobei die gegenüberliegenden Abschnitte mit einem gleichen Abstand in der vorbestimmten Richtung angeordnet sind, wodurch das primäre magnetische Element relativ zu dem sekundären magnetischen Element bewegt wird, wenn ein Magnetfeld auf die gegenüberliegenden Abschnitte wirkt, die mit dem sekundären magnetischen Element ausgebildet sind,
wobei der Betätiger der Bauart mit starker magnetischer Schubkraft dadurch gekennzeichnet ist, daß das primäre magnetische Element (22) weiterhin aufweist:
einen Kern (70, 80) mit gegenüberliegenden Abschnitten (70Aa, 70Ad, 80Ba, 80Bd), die mit einem ersten gleichen Abstand in der vorbestimmten Richtung angeordnet sind und sich in einer Richtung transversal zu der vorbestimmten Richtung erstrecken; und einen isolierten Draht (71, 81), der um den Kern gewickelt ist, um Magnetpole auszubilden, und wobei
das sekundäre magnetische Element (21) weiterhin aufweist:
gegenüberliegende Abschnitte (72a), die den gegenüberliegenden Abschnitten gegenüberliegen, die mit dem Kern ausgebildet sind, wobei die gegenüberliegenden Abschnitte (72a) um einen zweiten gleichen Abstand in der vorbestimmten Richtung getrennt sind; und
eine Vielzahl von Permanentmagneten (72b), die zwischen Seitenflächen der gegenüberliegenden Abschnitte (72a) in einer rechtwinkligen Richtung in bezug auf eine gegenüberliegende Oberfläche der gegenüberliegenden Abschnitte eingefügt ist, so daß benachbarte Permanentmagnete eine entgegengesetzte Polarität haben, und wobei der erste gleich Abstand der gegenüberliegenden Abschnitte, die mit dem primären magnetischen Element ausgebildet sind, etwa zweimal so groß ist wie der zweite gleiche Abstand der gegenüberliegenden Abschnitte, die mit dem sekundären magnetischen Element ausgebildet sind,
wobei dann, wenn der isolierte Draht stromführend ist, die gegenüberliegenden Abschnitte des primären magnetischen Elements, die in Richtung zu den gegenüberliegenden Abschnitten angeordnet sind, die mit dem sekundären magnetischen Element ausgebildet sind, dazu beitragen, einen magnetischen Schub zum Bewegen des primären magnetischen Elements relativ zu dem sekundären magnetischen Element zu erzeugen.

15. Betätiger der Bauart mit starker magnetischer Schubkraft nach Anspruch 14, wobei
das primäre magnetische Element folgendes aufweist:
einen Kern mit drei Vorsprüngen in einer Richtung transversal zu der vorbestimmten Richtung, wobei die Vorsprünge gegenüberliegende Abschnitte haben, die mit einem ersten gleichen Abstand in der vorbestimmten Richtung angeordnet sind, und ein zweiter Vorsprung der drei Vorsprünge um 1/3 des ersten gleichen Abstands in bezug auf einen ersten Vorsprung verschoben ist, und ein dritter Vorsprung der drei Vorsprünge um 1/3 des ersten vorbestimmten Abstands in bezug auf den zweiten Vorsprung in der vorbestimmten Richtung verschoben ist.

16. Betätiger der Bauart mit starker magnetischer Schubkraft nach Anspruch 14, wobei
das primäre magnetische Element folgendes aufweist:
einen Kern mit zwei Vorsprüngen in einer Richtung transversal zu der vorbestimmten Richtung, wobei die Vorsprünge gegenüberliegende Abschnitte haben, die mit einem ersten gleichen Abstand in der vorbestimmten Richtung angeordnet sind, und ein zweiter Vorsprung der zwei Vorsprünge um 1/2 des ersten gleichen Abstands in bezug auf einen ersten Vorsprung der zwei Vorsprünge in der vorbestimmten Richtung verschoben ist.

17. Betätiger der Bauart mit starker magnetischer Schubkraft nach Anspruch 14, wobei das primäre magnetische Element folgendes aufweist:
einen ringförmigen Kern mit gegenüberliegenden Abschnitten, die in einer ersten gleichen Bogenlänge in einer Drehrichtung angeordnet sind und sich in einer radialen Richtung erstrecken;
einen isolierten Draht, der entlang des ringförmigen Kerns gewickelt ist, um Magnetpole auszubilden, wobei
das sekundäre magnetische Element folgendes aufweist:
die gegenüberliegenden Abschnitte, die den gegenüberliegenden Abschnitten gegenüberliegen, die mit dem ringförmigen Kern ausgebildet sind, wobei die gegenüberliegenden Abschnitte um eine zweite gleiche Bogenlänge in der Drehrichtung getrennt sind; und
einen Permanentmagneten, der zwischen Seitenflächen der gegenüberliegenden Abschnitte in der rechtwinkligen Richtung zueiner gegenüberliegenden Oberfläche der gegenüberliegenden Abschnitte eingefügt ist, so daß jeder der benachbarten Permanentmagnete eine entgegengesetzte Polarität hat, wodurch die erste gleiche Bogenlänge der gegenüberliegenden Abschnitte, die mit dem ringförmigen Kern ausgebildet sind, etwa zweimal so groß wie die zweite gleiche Bogenlänge der gegenüberliegenden Abschnitte ist, die mit dem sekundären magnetischen Element ausgebildet sind.

18. Betätiger der Bauart mit starker magnetischer Schubkraft nach Anspruch 17, wobei jeder gegenüberliegende Abschnitt der zwei identischen ringförmigen Kerne jedem Seite an Seite gegenüberliegenden Abschnitt des sekundären magnetischen Elements gegenüberliegt, und eine Achse des sekundären magnetischen Elements drehbar an einer Welle montiert ist.

## Revendications

1. Actionneur du type à forte poussée magnétique qui comprend :
un élément magnétique primaire (22) supporté par un moyen de support se déplaçant le long d'une direction prédéterminée, l'élément magnétique primaire générant un champ magnétique dans une direction transversale par rapport à la direction prédéterminée par ses pôles magnétiques ; et,
un élément magnétique secondaire (21) comportant une pluralité de parties de face faisant face à l'élément magnétique primaire, dans lequel les parties de face sont disposées à pas égal dans la direction prédéterminée, en déplaçant ainsi l'élément magnétique primaire par rapport à l'élément magnétique secondaire quand un champ magnétique agit sur les parties de face formées avec l'élément magnétique secondaire,
ledit actionneur du type à forte poussée magnétique étant caractérisé en ce que ledit élément magnétique primaire comprend en outre :
des noyaux (24a, 24h) comportant une pluralité d'éléments en plaque séparés par des premiers pas égaux dans la direction prédéterminée, dans lesquels lesdits éléments en plaque comportent des parties de face s'étendant dans une direction transversale par rapport à la direction prédéterminée ;
une pluralité d'aimants permanents (25a, 25g) insérés entre des surfaces latérales des éléments en plaque dans une direction perpendiculaire aux parties de face de telle sorte que les aimants permanents voisins sont de polarité opposée ; et,
un fil isolé (30, 32) enroulé autour des noyaux (24a, 24h) de manière à former des pôles magnétiques,
et dans lequel ledit élément magnétique secondaire comprend en outre :
des parties de face (21a, 21c) faisant face aux parties de face formées avec l'élément magnétique primaire, lesdites parties de face étant disposées à un second pas égal dans la direction prédéterminée, ledit second pas égal des parties de face formées avec l'élément magnétique secondaire étant approximativement égal au double du premier pas égal des parties de face formées avec l'élément magnétique primaire,
lesdites parties de face de l'élément magnétique primaire qui sont disposées vers les parties de face formées avec l'élément magnétique secondaire contribuant ainsi à produire une poussée magnétique, quand le fil isolé est excité, pour déplacer l'élément magnétique primaire par rapport à l'élément magnétique secondaire.

2. Actionneur du type à forte poussée magnétique selon la revendication 1, dans lequel l'aimant permanent est inséré entre lesdites surfaces des éléments en plaque, où une zone de l'aimant permanent occupe partiellement une surface perpendiculaire proche des parties de face.

3. Actionneur du type à forte poussée magnétique selon la revendication 2, dans lequel les parties non occupées des surfaces perpendiculaires entre les éléments en plaque sont insérées par un matériau non magnétique.

4. Actionneur du type à forte poussée magnétique selon la revendication 1, dans lequel
l'élément magnétique primaire comprend :
un noyau comportant une pluralité d'éléments en plaque séparés par un premier pas égal dans la direction prédéterminée, où les éléments en plaque comportent trois parties saillantes dans une direction transversale par rapport à la direction prédéterminée, les parties saillantes comportant des parties de face dans la direction prédéterminée ; et,
un fil isolé enroulé autour des parties saillantes respectives pour former trois pôles magnétiques ,
dans lequel l'élément magnétique secondaire comprend :
des parties de face de trois rangées faisant face aux parties de face formées avec les trois parties saillantes, les parties de face de trois rangées étant disposées à un second pas égal dans la direction prédéterminée,, où chaque partie de face de la deuxième rangée est décalée de 1/3 du second pas égal par rapport à chaque partie de face d'une première rangée, et chaque partie de face de la troisième rangée est décalée de 1/3 du second pas égal par rapport à chaque partie de face de la deuxième rangée dans la direction prédéterminée.

5. Actionneur du type à forte poussée magnétique selon la revendication 1, dans lequel
l'élément magnétique primaire comprend :
un noyau comportant une pluralité d'éléments en plaque séparés par un premier pas égal dans la direction prédéterminée, où les éléments en plaque comportent trois parties saillantes dans une direction transversale par rapport à la direction prédéterminée, les parties saillantes comportant des parties de face dans la direction prédéterminée ; et,
un fil isolé enroulé autour de la partie saillante centrale pour former des pôles magnétiques,
dans lequel l'élément magnétique secondaire comprend :
des parties de face de trois rangées faisant face aux parties de face formées avec les trois parties saillantes, les parties de face de trois rangées respectives étant disposées au second pas égal dans la direction prédéterminée, où chaque partie de face de la rangée centrale est décalée de 1/2 du second pas égal par rapport à chaque partie de face des deux rangées dans la direction prédéterminée.

6. Actionneur du type à forte poussée magnétique selon la revendication 5, dans lequel deux éléments magnétiques primaires identiques sont connectés par un moyen de connexion à une distance prédéterminée entre eux dans la direction prédéterminée.

7. Actionneur du type à forte poussée magnétique selon la revendication 1, dans lequel l'élément magnétique primaire comprend :
un noyau comportant une pluralité d'éléments en plaque séparés par un premier pas égal dans la direction prédéterminée, où les éléments en plaque comportent deux parties saillantes dans une direction transversale par rapport à la direction prédéterminée, les parties saillantes comportant des parties de face dans la direction prédéterminée,
dans lequel l'élément magnétique secondaire comprend :
des parties de face de deux rangées faisant face aux parties de face formées avec les deux parties saillantes, les parties de face de deux rangées respectives étant disposées à un second pas égal dans la direction prédéterminée, où chaque partie de face d'une seconde rangée est décalée de 1/2 du second pas égal par rapport à chaque partie de face de la première rangée.

8. Actionneur du type à forte poussée magnétique selon la revendication 1, dans lequel l'élément magnétique primaire comprend :
un noyau comprenant une pluralité de plaques en U qui sont laminées pour former deux parties saillantes dont chaque face d'extrémité comporte des parties de face séparées par un premier pas égal dans la direction prédéterminée, et les deux éléments magnétiques primaires identiques sont connectés par un moyen de connexion avec des intervalles d'espacement prédéterminés entre eux dans la direction prédéterminée ;
un aimant permanent ayant une forme en U inséré entre les plaques en forme de U de telle sorte que chacun des aimants permanents voisins est de polarité opposée ; et,
un fil isolé enroulé autour du noyau pour former des pôles magnétiques,
dans lequel l'élément magnétique secondaire comprend :
des parties de face d'une seule rangée faisant face aux parties de face formées avec les deux parties saillantes, les parties de face d'une seule rangée étant disposées à un second pas égal dans la direction prédéterminée.

9. Actionneur du type à forte poussée magnétique selon la revendication 8, dans lequel le fil isolé est enroulé autour d'une partie latérale du noyau pour former deux pôles magnétiques.

10. Actionneur du type à forte poussée magnétique selon la revendication 1, dans lequel l'élément magnétique primaire comprend :
un noyau comportant une pluralité d'éléments en plaque séparés par un premier pas égal dans la direction prédéterminée, où les éléments en plaque ont des parties de face parallèles, qui se font face les unes avec les autres dos à dos ; et,
un fil isolé enroulé autour de tous les éléments en plaque parallèles à la direction prédéterminée,
dans lequel l'élément magnétique secondaire comprend :
des parties de face parallèles, qui font face aux parties de face formées avec les éléments en plaque et dont chacune est décalée de 1/2 du second pas égal par rapport à une autre.

11. Actionneur du type à forte poussée magnétique selon la revendication 10, dans lequel les deux éléments magnétiques primaires identiques sont connectés par un moyen de connexion avec des intervalles d'espacement prédéterminés entre eux dans la direction prédéterminée.

12. Actionneur du type à forte poussée magnétique selon la revendication 1, dans lequel l'élément magnétique primaire comprend :
un noyau comprenant deux groupes d'éléments en plaque dont chacun est connecté par un moyen de connexion dans le même plan de telle sorte que les groupes sont à intervalles d'espacement prédéterminés, chaque élément en plaque d'un groupe d'éléments en plaque étant séparé par un premier pas égal dans la direction prédéterminée, chaque groupe d'éléments en plaque comportant une pluralité de parties saillantes dans une direction transversale par rapport à la direction prédéterminée, les parties saillantes comportant des parties de face dans la direction prédéterminée, chaque partie de face des groupes d'éléments en plaque faisant ainsi face à un autre,
dans lequel l'élément magnétique secondaire comprend :
des parties de face des deux côtés dont chacune fait face à chaque partie de face formée avec chaque groupe d'éléments en plaque, de telle sorte que les parties de face des deux côtés sont insérées dans les intervalles d'espacement prédéterminés entre les groupes d'éléments en plaque respectifs.

13. Actionneur du type à forte poussée magnétique selon la revendication 1, dans lequel ledit élément magnétique secondaire a une forme de cadre rectangulaire de telle sorte que ledit élément magnétique primaire est inséré dans ledit élément magnétique secondaire, en réagissant ainsi au courant à variation alternative passant dans le fil isolé, ledit élément magnétique primaire est déplacé à l'intérieur dudit élément magnétique secondaire selon une manière de réciprocité.

14. Actionneur du type à forte poussée magnétique qui comprend :
un élément magnétique primaire (22) supporté par un moyen de support pour un déplacement le long d'une direction prédéterminée, l'élément magnétique primaire générant un champ magnétique dans une direction transversale par rapport à la direction prédéterminée par ses pôles magnétiques ; et,
un élément magnétique secondaire (21) comportant une pluralité de parties de face faisant face à l'élément magnétique primaire, où les parties de face sont disposées à un pas égal dans la direction prédéterminée, en déplaçant ainsi l'élément magnétique primaire par rapport à l'élément magnétique secondaire quand un champ magnétique agit sur les parties de face formées avec l'élément magnétique secondaire,
ledit actionneur du type à forte poussée magnétique étant caractérisé en ce que ledit élément magnétique primaire (22) comprend en outre :
un noyau (70, 80) comportant des parties de face (70Aa, 70Ad, 80Ba, 80Bd) disposées à un premier pas égal dans la direction prédéterminée et s'étendant dans une direction transversale par rapport à la direction prédéterminée ; et,
un fil isolé (71, 81) enroulé autour du noyau de manière à former des pôles magnétiques,
dans lequel ledit élément magnétique secondaire (21) comprend en outre :
des parties de face (72a) faisant face aux parties de face formées avec le noyau, lesdites parties de face (72a) étant séparées par un second pas égal dans la direction prédéterminée ; et,
une pluralité d'aimants permanents (72b) insérés entre des surfaces latérales des parties de face (72a) dans une direction perpendiculaire par rapport à une surface de face des parties de face, de telle sorte que les aimants permanents voisins sont de polarité opposée,
et dans lequel ledit premier pas égal des parties de face formées avec l'élément magnétique primaire est approximativement égal au double du second pas égal des parties de face formées avec l'élément magnétique secondaire,
lesdites parties de face de l'élément magnétique primaire qui sont disposées vers les parties de face formées avec l'élément magnétique secondaire contribuant ainsi à produire une poussée magnétique, quand le fil isolé est excité, pour déplacer l'élément magnétique primaire par rapport à l'élément magnétique secondaire.

15. Actionneur du type à forte poussée magnétique selon la revendication 14,
dans lequel l'élément magnétique primaire comprend :
un noyau comportant trois parties saillantes dans une direction transversale par rapport à la direction prédéterminée, où les parties saillantes comportent des parties de face disposées à un premier pas égal dans la direction prédéterminée, et une deuxième partie saillante des trois parties saillantes est décalée de 1/3 du premier pas égal par rapport à une première partie saillante, et une troisième partie saillante des trois parties saillantes est décalée de 1/3 du premier pas égal par rapport à la deuxième partie saillante dans la direction prédéterminée.

16. Actionneur du type à forte poussée magnétique selon la revendication 14, dans lequel l'élément magnétique primaire comprend :
un noyau comportant deux parties saillantes dans une direction transversale par rapport à la direction prédéterminée, où les parties saillantes comportent des parties de face disposées à un premier pas égal dans la direction prédéterminée, et une seconde partie saillante des deux parties saillantes est décalée de 1/2 du premier pas égal par rapport à une première partie saillante des deux parties saillantes dans la direction prédéterminée.

17. Actionneur du type à forte poussée magnétique selon la revendication 14, dans lequel l'élément magnétique primaire comprend :
un noyau annulaire comportant des parties de face disposées à une première longueur d'arc égale dans un sens de rotation et étendu dans une direction radiale ;
un fil isolé enroulé le long du noyau annulaire pour former des pôles magnétiques,
dans lequel l'élément magnétique secondaire comprend :
les parties de face faisant face aux parties de face formées avec le noyau annulaire, les parties de face étant séparées par une seconde longueur d'arc égale dans le sens de la rotation ; et,
un aimant permanent inséré entre des surfaces latérales des parties de face dans la direction perpendiculaire à une surface de face des parties de face, de telle sorte que chacun des aimants permanents voisins est de polarité opposée, la première longueur d'arc égale des parties de face formées avec le noyau annulaire étant ainsi égale à environ le double de la seconde longueur d'arc égale des parties de face formées avec l'élément magnétique secondaire.

18. Actionneur du type à forte poussée magnétique selon la revendication 17, dans lequel chaque partie de face de deux noyaux annulaires identiques fait face à chaque partie de face côte-à-côte de l'élément magnétique secondaire, et un axe de l'élément magnétique secondaire est monté pour tourner sur un arbre.
